# EUROPEAN PATENT APPLICATION

(11) **EP 4 692 731 A1**
(43) Date of publication of application: **11.02.2026**
(21) Application number: 24902952.1
(22) Date of filing: 13.12.2024
(51) Int. Cl.: G01C 21/16, G01C 21/20, G08G 1/14

(54) **INDOOR NAVIGATION METHOD AND ELECTRONIC DEVICE**

(30) Priority: 15.12.2023 CN 202311734633
(71) Applicant: Huawei Technologies Co., Ltd., Shenzhen, Guangdong 518129 (CN)
(72) Inventor: WU, Wenhao, Shenzhen, Guangdong 518129 (CN); ZENG, Yuhao, Shenzhen, Guangdong 518129 (CN); XU, Qiang, Shenzhen, Guangdong 518129 (CN); YE, Xuehan, Shenzhen, Guangdong 518129 (CN); TANG, Ming, Shenzhen, Guangdong 518129 (CN); GUAN, Ran, Shenzhen, Guangdong 518129 (CN)
(74) Representative: Epping - Hermann - Fischer
(86) International application number: PCT/CN2024/139104
(87) International publication number: WO 2025/124535

(57) **Abstract**

An indoor navigation method, an electronic device, a chip, and a readable storage medium are provided. The method includes: When the electronic device cannot obtain a location of a vehicle, the electronic device may record a walking track of a user based on data of various sensors, and when the user subsequently searches for the vehicle, the electronic device may provide direction and distance guidance of the vehicle for the user based on the walking track and a current location of the electronic device; or when the electronic device can obtain a location of a vehicle, the electronic device records a target floor on which the location of the vehicle is located, and when a user subsequently searches for the vehicle, and it is determined that the electronic device is located on the target floor, the electronic device records a walking track of the user based on the obtained location of the electronic device, to provide direction and distance guidance of the vehicle for the user. In the method, in an indoor vehicle search scenario, the electronic device may provide direction and distance guidance on the location of the vehicle for the user, so that the user can conveniently find the location of the vehicle.

## Description

This application claims priority to Chinese Patent Application No. 202311734633.0, filed with the China National Intellectual Property Administration on December 15, 2023 and entitled "INDOOR NAVIGATION METHOD AND ELECTRONIC DEVICE", which is incorporated herein by reference in its entirety.

### TECHNICAL FIELD

Embodiments of this application relate to the field of electronic technologies, and more specifically, to an indoor navigation method and an electronic device.

### BACKGROUND

Currently, many indoor parking lots are located in underground garages (such as the basement level 1 and the basement level 2), and positioning signals in the underground garages are weak. As a result, after a user parks a vehicle, the vehicle cannot be accurately located. Because an underground parking lot usually has a large area, when the user needs to use the vehicle again, the user usually needs to search for the vehicle based on memory. It is difficult and time-consuming for the user to accurately find a location of the vehicle.

### SUMMARY

This application provides an indoor navigation method and an electronic device. In this technical solution, various data information may be obtained via an electronic device carried by a user, to record a track of the user from a getting-off point to an identified location. In this way, when the user subsequently arrives at the identified location again, the electronic device may provide corresponding direction and distance guidance for the user based on a previously obtained walking track, so that the user can conveniently find a location of a vehicle.

According to a first aspect, an indoor navigation method is provided. The method includes: obtaining first data information when a first preset condition is met, where the first data information includes posture information and direction information of the electronic device, and/or location fingerprint information; recording a first track of the electronic device based on the first data information, where a start point of the first track is a location point determined by the electronic device based on the first data information when the first preset condition is met; determining an end point of the first track based on second data information when a second preset condition is met, where the first track of the electronic device is formed between the end point and the start point of the first track; and displaying a first display interface when a third preset condition is met, where the first display interface includes first prompt information, and the first prompt information indicates a direction from a location of the electronic device to the start point.

It should be understood that the start point of the first track is a location of a vehicle.

The location fingerprint information may include information formed by one or more pieces of data in data such as a strength of a Wi-Fi signal, a strength of a Bluetooth signal, and data of a magnetometer.

Optionally, the first prompt information may further indicate a distance from the location of the electronic device to the start point.

After the electronic device detects that a user gets off the vehicle, the electronic device may obtain data of various sensors, and record a walking track of the user, that is, the first track; the electronic device may determine the end point (for example, an elevator room) of the first track when the second preset condition is met; and when the user subsequently searches for the vehicle, if the electronic device determines that a location of the user is at the end point of the first track, or the user passes through the end point of the first track, the electronic device may start to perform track backtracking, and may display, in the first display interface, a direction from the current location of the user to the start point of the first track.

In this technical solution, various data information may be obtained via an electronic device carried by the user, to record a track of the user from a getting-off point to an identified location (for example, an elevator room). In this way, when the user subsequently arrives at the identified location again or passes through the identified location, the electronic device may provide corresponding direction guidance for the user based on a previously obtained walking track, so that the user can conveniently find the location of the vehicle.

With reference to the first aspect, in some implementations of the first aspect, displaying the first display interface when the third preset condition is met includes:
when the third preset condition is met, displaying the first display interface in response to a first operation of a user.

For example, the first operation may be an operation of tapping some function buttons by the user.

Based on this embodiment of this application, the electronic device may display the first display interface based on the operation of the user, to provide vehicle search guidance for the user.

With reference to the first aspect, in some implementations of the first aspect, the third preset condition includes at least one of the following conditions: The location of the electronic device is at the end point of the first track; and a second track of the electronic device includes the end point of the first track, the second track is determined by the electronic device based on third data information, and the third data information includes posture information and direction information of the electronic device, and/or location fingerprint information, where the second track and the first track are located in a same coordinate system; or when a floor change is detected, a difference between a location obtained by the electronic device for the last time and a target key point is less than a threshold.

It may be understood that a type included in the third data information may be the same as a type included in the first data information, that is, may be data information of various sensors and wireless fingerprint information.

The second track is a walking track of the user that is recorded by the electronic device in a vehicle search phase of the user.

With reference to the first aspect, in some implementations of the first aspect, the method further includes: displaying a second display interface in response to a second operation of the user, where the second display interface includes the first track, indication information of a location and a direction of the electronic device, and/or the second track.

Based on this embodiment of this application, the electronic device may display, in response to the second operation of the user, the second display interface including the first track, and the indication information of the location and the direction of the electronic device, so that real-time guidance on the location of the vehicle and the current location of the user can be provided for the user. In addition, the second display interface may further include the second track, so that the user can determine whether a walking track of the user deviates from an originally recorded track in the vehicle search phase of the user.

With reference to the first aspect, in some implementations of the first aspect, recording the first track of the electronic device based on the first data information includes: determining, based on the first data information, relative displacement, a direction, and/or location fingerprint information of a target moment relative to a moment at which the start point is located or a previous moment of the target moment; and recording the first track based on the relative displacement, the direction, and/or the location fingerprint information.

It should be understood that the target moment may be a moment at which a sensor of the electronic device performs sampling.

Based on this embodiment of this application, the electronic device may determine, based on various types of data, the relative displacement, the direction, and/or the location fingerprint information of the target moment relative to the moment at which the start point is located or the previous moment of the target moment, to record the walking track of the user.

With reference to the first aspect, in some implementations of the first aspect, the method further includes: in a moving process of the electronic device, updating the direction in the first prompt information in real time based on the first track.

Based on this embodiment of this application, in the process in which the user moves with the electronic device, the electronic device may further update the direction in the first prompt information in real time. In this way, real-time direction guidance can be provided for the user.

With reference to the first aspect, in some implementations of the first aspect, updating the direction in the first prompt information in real time based on the first track includes: determining displacement, a direction, and/or location fingerprint information of a location of the electronic device relative to the first track based on fourth data information; and updating the direction in the first prompt information in real time based on the displacement, the direction, and/or the location fingerprint information of the location relative to the first track and the first track.

In the process in which the user moves with the electronic device, the electronic device may determine, based on the obtained fourth data information, information such as the displacement and the direction in which the electronic device is currently located, to update the direction in the first prompt information in real time.

With reference to the first aspect, in some implementations of the first aspect, before displaying a first display interface, the method further includes: if the location of the electronic device is not at the end point of the first track, displaying a third display interface in response to a third operation of the user, where the third display interface includes a location of the end point of the first track.

For example, the end point of the first track may be a junction between an underground garage and a shopping mall, or the end point of the first track may be a junction between an underground garage and the outside.

Based on this embodiment of this application, if the user is not at the end point of the first track, the user may further view the location of the end point of the first track based on the third operation, to provide guidance on the location of the end point of the track for the user.

With reference to the first aspect, in some implementations of the first aspect, determining the end point of the first track based on the second data information includes: determining location information of the target key point; and determining the end point of the first track based on the location information of the target key point and the second data information; and the method further includes: if the location of the electronic device is not at the end point of the first track, displaying a third display interface in response to a third operation of the user, where the third display interface includes the location information of the target key point.

For example, if the user takes an elevator from the underground garage, the target key point may be a location at which the user leaves the elevator. Because the user leaves the elevator and enters the shopping mall, the electronic device may obtain location information of the location, for example, longitude and latitude coordinates. The end point of the first track may be a location near the elevator that the user enters.

Based on this embodiment of this application, the electronic device may display a location of the target key point based on the operation of the user, to provide guidance on the location of the target key point for the user. This helps the user find the target key point based on the guidance, and facilitates subsequent accurate vehicle search.

With reference to the first aspect, in some implementations of the first aspect, the method further includes:
displaying a fourth display interface in response to a fourth operation of the user, where the fourth display interface includes the first track of the electronic device.

Based on this embodiment of this application, the electronic device may display the first track of the electronic device based on the operation of the user, so that the user can view a track from a getting-off point to a key identification point.

With reference to the first aspect, in some implementations of the first aspect, the fourth display interface further includes a location and a direction of the electronic device.

Based on this embodiment of this application, the fourth display interface may further include the current location and the current direction of the electronic device, so that the user can determine a relative relationship between the location of the user and the first track.

With reference to the first aspect, in some implementations of the first aspect, an actual direction of a segment of track that is in the first track and that has a determined direction is a first direction, and after the first track in the third display interface is rotated, a direction of the segment of track that has the determined direction is displayed as a second direction, where the second direction is perpendicular to an edge on which a status bar of the electronic device is located.

For example, if the first direction is a direction of entering an elevator, the second direction is downward. Alternatively, if the first direction is a direction of leaving an elevator, the second direction is upward.

With reference to the first aspect, in some implementations of the first aspect, the method further includes: obtaining fifth data information of the electronic device; and if a similarity between the fifth data information and the second data information is greater than a first threshold, determining that the location of the electronic device is at the end point of the first track; or if a similarity between the fifth data information and the second data information is less than or equal to a first threshold, determining that the location of the electronic device is not at the end point of the first track.

Based on this embodiment of this application, the electronic device may determine, based on a relationship between the obtained fifth data information and the obtained second data information, whether the current location of the electronic device is at the end point of the first track. This helps the electronic device determine whether to start to record the track of the user again, to provide direction and distance guidance for the user.

With reference to the first aspect, in some implementations of the first aspect, the method further includes: in response to a fifth operation of the user, determining that the location of the electronic device is at the end point of the first track.

In some cases, there may also be a deviation in determining by the electronic device. A case in which the user is already located at the end point of the first track but the electronic device determines that the user is not located at the end point of the first track may occur. In this case, the user may perform the fifth operation, so that the electronic device determines that the user is currently located at the end point of the first track.

For example, the fifth operation may be an operation of selecting, by the user, an option box indicating that the end point of the first track has been reached.

With reference to the first aspect, in some implementations of the first aspect, the first prompt information further includes a distance from the location to the start point.

Based on this embodiment of this application, the first prompt information may further include the distance from the current location of the electronic device to the start point of the first track. This helps the user learn of a distance from the current location to a parking location.

With reference to the first aspect, in some implementations of the first aspect, the electronic device is communicatively connected to an intelligent driving device, and the first preset condition includes at least one of the following conditions: a gear of the intelligent driving device is in a parking gear; the communication connection between the electronic device and the intelligent driving device is disconnected; the intelligent driving device is in a locked state; an operation of starting track recording is detected; or a distance between the electronic device and the intelligent driving device is greater than a preset distance, where the preset distance is calculated by the electronic device in a wireless communication manner.

For example, the wireless communication manner may include Bluetooth, UWB, and the like.

With reference to the first aspect, in some implementations of the first aspect, the second preset condition includes at least one of the following conditions: a change value of data that is of a magnetometer and that is obtained by the electronic device is greater than a second threshold; an absolute change value of data that is of a barometer and that is obtained by the electronic device is greater than a third threshold, or a change value of data that is of a barometer and that is obtained by the electronic device within preset time is greater than a fourth threshold; a change of data that is of an inertial sensor and that is obtained by the electronic device conforms to a first rule, and the inertial sensor includes at least one of an accelerometer, a gyro, or a magnetometer; a signal strength of a communication signal of the electronic device conforms to a second rule, and the communication signal includes at least one of a Wi-Fi signal, a Bluetooth signal, a cellular signal, or a positioning signal; the electronic device is able to obtain accurate positioning information; or a floor on which the electronic device is located changes.

According to a second aspect, an indoor navigation method is provided. The method is applied to an electronic device, and the method includes: determining first location information of an intelligent driving device, second location information of a target key point, and a target floor on which the intelligent driving device is located; obtaining third location information of the electronic device; if it is determined that the electronic device is located on the target floor, recording a third track of the electronic device based on second information, where a start point of the third track is a location corresponding to the third location information, and the second information includes posture information and direction information of the electronic device, and/or location fingerprint information; and displaying a first display interface in response to a first operation of a user, where the first display interface includes first prompt information, and the first prompt information indicates a direction from a current location of the electronic device to the intelligent driving device.

For example, the first location information, the second location information, and the third location information may be longitude and latitude information.

Based on this embodiment of this application, the electronic device may first determine the first location information of the intelligent driving device (for example, a vehicle), the second location information of the target key point, and the target floor on which the parked vehicle is located. When the user subsequently searches for a vehicle, the electronic device may continuously obtain the third location information of the electronic device when the electronic device can obtain accurate location information. If it is further determined that the electronic device is located on the target floor, the electronic device may record the third track of the electronic device based on the second information, and the last obtained third location information of the electronic device is used as the start point of the third track. In this way, when the user expects the electronic device to provide guidance, the user may enable, through the first operation, the electronic device to display the first display interface, to provide direction guidance on a direction from the current location to a location of the vehicle for the user.

In this technical solution, after the user gets off the vehicle, the electronic device has determined a longitude and latitude of the vehicle, the target floor on which the vehicle is located, and a longitude and latitude of the target key point (for example, an elevator room). During subsequent vehicle search, the electronic device may continuously obtain the third location information of the electronic device when the electronic device can obtain accurate location information. After the user arrives at the target floor, the electronic device may start to record a track, and the third location information is used as a start point. Because the recorded track also has a direction and a distance, and longitude and latitude coordinates of the vehicle are known, the electronic device may provide direction and distance guidance for the user.

With reference to the second aspect, in some implementations of the second aspect, determining that the electronic device is located on the target floor includes: if a difference between obtained first data and second data of a barometer is less than a fifth threshold, determining that the electronic device is located on the target floor, where the first data is a value that is of the barometer and that is currently obtained by the electronic device, and the second data is a value that is of the barometer and that is obtained on the target floor and that is recorded by the electronic device; or determining, based on obtained floor information, that the electronic device is located on the target floor.

Based on this embodiment of this application, the electronic device may determine, in a plurality of manners, whether the electronic device is located on the target floor.

With reference to the second aspect, in some implementations of the second aspect, before determining that the electronic device is located on the target floor, the method further includes: determining that a difference between the third location information and the second location information is less than or equal to a sixth threshold; or determining that the third location information is location information obtained by the electronic device for the last time.

Based on this embodiment of this application, if the difference between the third location information and the second location information is less than or equal to the sixth threshold, it may be determined that the user comes out of the previous elevator. The third location information is the location information obtained by the electronic device for the last time, and may be location information obtained when the user comes out of another location. In both cases, the technical solutions of this application are applicable.

With reference to the second aspect, in some implementations of the second aspect, the method further includes: displaying a second display interface in response to a second operation of the user, where the second display interface includes the first location information, the second location information, indication information of a current location and a current direction of the electronic device, and/or the third track.

Based on this embodiment of this application, the user may further view a specific location of the vehicle, the current location and direction of the electronic device, and/or the third track of the user after the user is located on the target floor through a convenient operation. This helps the user determine the location of the user and the location of the vehicle.

With reference to the second aspect, in some implementations of the second aspect, recording the third track of the electronic device based on the second information includes: determining a location, a direction, and/or location fingerprint information at a current moment based on the second information and the third location information; and recording the third track based on the location, the direction, and/or the location fingerprint information at the current moment.

Based on this embodiment of this application, the electronic device may determine the location, the direction, and/or the location fingerprint information at the current moment based on various data and the third location information of the electronic device, to record a walking track of the user.

With reference to the second aspect, in some implementations of the second aspect, the first prompt information further includes a distance from the current location to the intelligent driving device.

Based on this embodiment of this application, the first prompt information may further include the distance from the current location of the electronic device to the start point of the first track. This helps the user learn of a distance from the current location to a parking location.

With reference to the second aspect, in some implementations of the second aspect, determining the first location information of the intelligent driving device includes: obtaining first data information when a first preset condition is met, where the first data information includes posture information and direction information of the electronic device, and/or location fingerprint information; recording a first track of the electronic device based on the first data information, where a start point of the first track is a location point determined by the electronic device based on the first data information when the first preset condition is met; determining an end point of the first track based on second data information when a second preset condition is met, where the first track of the electronic device is formed between the end point and the start point of the first track; and determining the first location information of the intelligent driving device based on a direction of the first track or directions of some tracks in the first track and the second location information of the target key point.

Based on this embodiment of this application, after the user gets off the vehicle, the electronic device may record the first track for which the user walks with the electronic device, and determine the first location information of the vehicle based on the direction of the first track or the directions of the some tracks and the second location information of the target key point. For example, the second location information is longitude and latitude coordinates, and the longitude and latitude coordinates may be obtained through reverse deduction based on longitude and latitude coordinates of the target key point and an exact direction in the first track.

According to a third aspect, an electronic device is provided, including one or more processors and one or more memories. The one or more memories store one or more programs. When the one or more programs are executed by the one or more processors, the indoor navigation method according to any one of the first aspect, the second aspect, and the possible implementations is performed.

According to a fourth aspect, indoor navigation is provided, including a module configured to implement the indoor navigation method according to any one of the first aspect, the second aspect, and the possible implementations.

According to a fifth aspect, a chip is provided. The chip includes a processor and a communication interface. The communication interface is configured to: receive a signal, and transmit the signal to the processor. The processor processes the signal, so that the indoor navigation method according to any one of the first aspect, the second aspect, and the possible implementations is performed.

According to a sixth aspect, a readable storage medium is provided. The readable storage medium stores instructions. When the instructions are run on an electronic device, the indoor navigation method according to any one of the first aspect, the second aspect, or the possible implementations is performed.

According to a seventh aspect, a computer program product is provided, so that the indoor navigation method according to any one of the first aspect, the second aspect, and the possible implementations is performed.

### BRIEF DESCRIPTION OF DRAWINGS

FIG. 1 is a diagram of a structure of an electronic device according to an embodiment of this application;
FIG. 2 is a diagram of a software structure of an electronic device according to an embodiment of this application;
FIG. 3 is a diagram in which an electronic device records a track according to an embodiment of this application;
FIG. 4 is another diagram in which an electronic device records a track according to an embodiment of this application;
FIG. 5 is a schematic flowchart of a method for recording a track according to an embodiment of this application;
FIG. 6(a) to FIG. 6(c) are a diagram of a group of GUIs according to an embodiment of this application;
FIG. 7(a) to FIG. 7(e) are a diagram of another group of GUIs according to an embodiment of this application;
FIG. 8(a) to FIG. 8(d) are a diagram of another group of GUIs according to an embodiment of this application;
FIG. 9(a) to FIG. 9(c) are a diagram of another group of GUIs according to an embodiment of this application;
FIG. 10(a) to FIG. 10(c) are a diagram of another group of GUIs according to an embodiment of this application;
FIG. 11(a) and FIG. 11(b) are a diagram of another group of GUIs according to an embodiment of this application;
FIG. 12 is a diagram of another group of GUIs according to an embodiment of this application;
FIG. 13 is a diagram of another group of GUIs according to an embodiment of this application;
FIG. 14 is a schematic flowchart of track backtracking according to an embodiment of this application;
FIG. 15 is a schematic flowchart of an indoor navigation method according to an embodiment of this application;
FIG. 16 is a schematic flowchart of another indoor navigation method according to an embodiment of this application; and
FIG. 17 is a block diagram of an electronic device according to an embodiment of this application.

### DESCRIPTION OF EMBODIMENTS

The following describes technical solutions of this application with reference to accompanying drawings.

An indoor navigation method in embodiments of this application may be applied to an electronic device, for example, a smartphone, a tablet computer, a notebook computer, a personal computer (personal computer, PC), an ultra-mobile personal computer (ultra-mobile personal computer, UMPC), a netbook, a vehicle-mounted device, a wearable device, a foldable device, and an internet of things (internet of things, IOT) device.

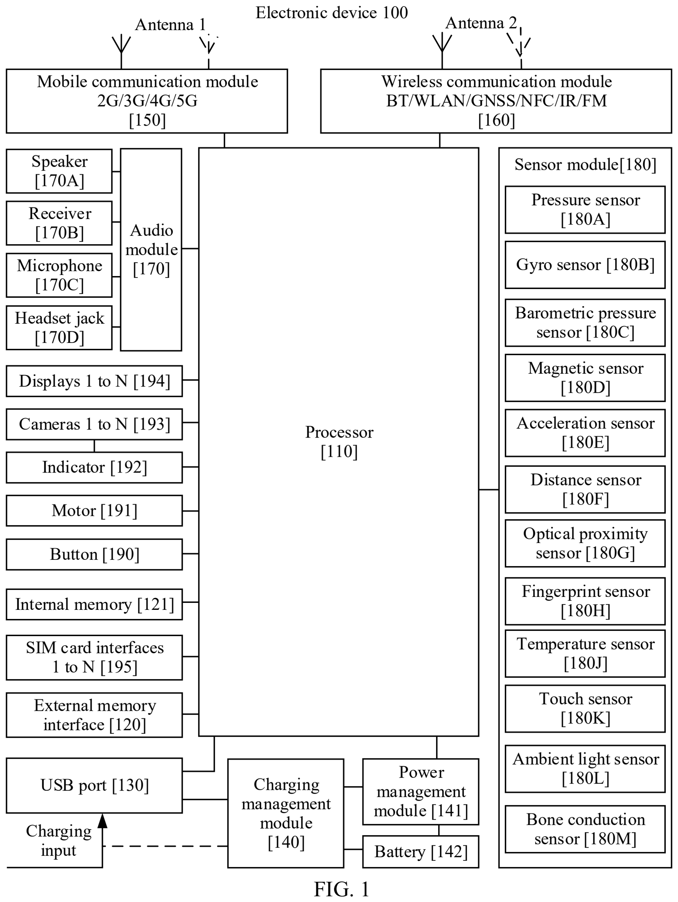

FIG. 1 is a diagram of a structure of an electronic device 100. The electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in embodiments of this application does not constitute a specific limitation on the electronic device 100. In some other embodiments of this application, the electronic device 100 may include more or fewer components than those shown in the figure, or a combination of a part of the components, or splits from a part of the components, or an arrangement of different components. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent devices, or may be integrated into one or more processors.

The controller may be a nerve center and a command center of the electronic device 100. The controller may generate an operation control signal based on an instruction operation code and a time sequence signal, to complete control of instruction fetching and instruction execution.

A memory may be disposed in the processor 110, and is configured to store instructions and data. In some embodiments, the memory in the processor 110 is a cache. The memory may store instructions or data that has been recently used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus interface, and/or the like.

The I2C interface is a two-way synchronization serial bus, and includes one serial data line (serial data line, SDA) and one serial clock line (serial clock line, SCL).

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170.

The PCM interface may also be configured to perform audio communication, and sample, quantize, and encode an analog signal. In some embodiments, the audio module 170 may be coupled to the wireless communication module 160 through a PCM bus interface.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160.

The MIPI interface may be configured to connect the processor 110 to a peripheral device, for example, the display 194 or the camera 193.

The GPIO interface may be configured by using software. The GPIO interface may be configured as a control signal, or may be configured as a data signal. In some embodiments, the GPIO interface may be configured to connect the processor 110 to the camera 193, the display 194, the wireless communication module 160, the audio module 170, the sensor module 180, or the like.

The USB port 130 is a port that conforms to a USB standard specification, and may be specifically a mini USB port, micro USB port, a USB type-C port, or the like. The USB port 130 may be configured to connect to a charger to charge the electronic device 100, or may be configured to transmit data between the electronic device 100 and a peripheral device.

It can be understood that an interface connection relationship between modules illustrated in embodiments of this application is merely an illustrative description, and does not constitute a limitation on a structure of the electronic device 100. In some other embodiments of this application, the electronic device 100 may alternatively use an interface connection mode different from that in the foregoing embodiment, or use a combination of a plurality of interface connection modes.

The charging management module 140 is configured to receive a charging input from a charger. The charger may be a wireless charger or a wired charger. In some embodiments of wired charging, the charging management module 140 may receive a charging input from a wired charger through the USB port 130. In some embodiments of wireless charging, the charging management module 140 may receive a wireless charging input through a wireless charging coil of the electronic device 100. The charging management module 140 may further supply power to the electronic device through the power management module 141 while charging the battery 142.

The power management module 141 is configured to connect to the battery 142, the charging management module 140, and the processor 110.

A wireless communication function of the electronic device 100 may be implemented through the antenna 1, the antenna 2, the mobile communication module 150, the wireless communication module 160, the modem processor, the baseband processor, and the like.

The mobile communication module 150 may provide a wireless communication solution that is applied to the electronic device 100 and that includes a 2G/3G/4G/5G or the like.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent device. In some other embodiments, the modem processor may be independent of the processor 110, and is disposed in a same device as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), Bluetooth low energy (Bluetooth low energy, BLE), a global navigation satellite system (global navigation satellite system, GNSS), frequency modulation (frequency modulation, FM), a near field communication (near field communication, NFC) technology, an infrared (infrared, IR) technology, or the like.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology.

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), or may be a display panel made of a material like an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement a photographing function through the camera 193, the ISP, the video codec, the GPU, the display 194, the application processor, and the like.

The ISP is configured to process data fed back by the camera 193. The camera 193 is configured to capture a static image or a video.

The digital signal processor is configured to process a digital signal, and may further process another digital signal in addition to a digital image signal.

The video codec is configured to: compress or decompress a digital video.

The external memory interface 120 may be configured to be connected to an external memory card, for example, a micro SD card, to extend a storage capability of the electronic device 100.

The internal memory 121 may be configured to store computer-executable program code. The executable program code includes instructions. The processor 110 runs the instructions stored in the internal memory 121, to perform various function applications and data processing of the electronic device 100.

The electronic device 100 may implement an audio function through the audio module 170, the speaker 170A, the receiver 170B, the microphone 170C, the headset jack 170D, the application processor.

The audio module 170 is configured to convert digital audio information into an analog audio signal output, and is also configured to convert an analog audio input into a digital audio signal.

The speaker 170A, also referred to as a "horn", is configured to convert an audio electrical signal into a sound signal.

The receiver 170B, also referred to as an "earpiece", is configured to convert an audio electrical signal into a sound signal.

The microphone 170C, also referred to as a "mike" or a "mic", is configured to convert a sound signal into an electrical signal.

The headset jack 170D is configured to connect to a wired headset.

The sensor module 180 may include a pressure sensor 180A, a gyro sensor 180B, a barometric pressure sensor 180C, an acceleration sensor 180E, a distance sensor 180F, a fingerprint sensor 180H, a touch sensor 180K, a bone conduction sensor 180M, and the like.

The button 190 includes a power button, a volume button, and the like.

The motor 191 may generate a vibration prompt.

The indicator 192 may be an indicator light, and may be configured to indicate a charging status and a power change, or may be configured to indicate a message, a missed call, a notification, and the like.

The SIM card interface 195 is configured to connect to a SIM card.

A software system of the electronic device 100 may use a layered architecture, an event-driven architecture, a microkernel architecture, a micro service architecture, or a cloud architecture. In embodiments of this application, an operating system with a layered architecture is used as an example to describe a software structure of the electronic device 100.

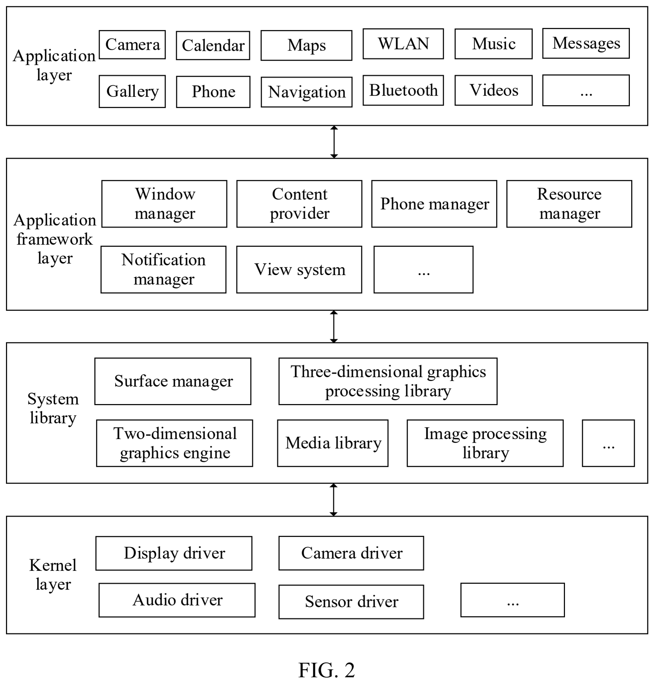

FIG. 2 is a block diagram of a software structure of an electronic device 100 according to an embodiment of this application. In a layered architecture, software is divided into several layers, and each layer has a clear role and task. The layers communicate with each other through a software interface. In some embodiments, the operating system is divided into four layers: an application layer, an application framework layer, a system library, and a kernel layer from top to bottom. The application layer may include a series of application packages.

As shown in FIG. 2, the application packages may include applications such as Camera, Gallery, Calendar, Phone, Maps, Navigation, WLAN, Bluetooth, Music, Videos, Messages, and Wallet.

The application framework layer provides an application programming interface (application programming interface, API) and a programming framework for an application in the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, a phone book, and the like.

The view system includes visual controls such as a control for displaying a text and a control for displaying an image. The view system may be configured to construct an application. A display interface may include one or more views. For example, a display interface including a notification icon of Messages may include a text display view and an image display view.

The phone manager is configured to provide a communication function for the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction. For example, the notification manager is configured to notify download completion, give a message notification, and the like. The notification manager may alternatively be a notification that appears in a top status bar of a system in a form of a graph or a scroll bar text, for example, a notification of an application that is run on a background, or may be a notification that appears on a screen in a form of a dialog window. For example, text information is displayed in the status bar, an alert tone is made, the electronic device vibrates, or the indicator light blinks.

A kernel library includes two parts: a function to be invoked by a Java language, and a kernel library.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, static image files, and the like. The media library may support a plurality of audio and video encoding formats such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

Before the technical solutions of this application are described, some technical terms that may be related in this application are first described as follows.

Location fingerprint information: A location in an actual environment is associated with a "fingerprint", and one location corresponds to one unique fingerprint. The fingerprint may be information formed by one or more of the following: a strength of a Wi-Fi signal, a strength of a Bluetooth signal, data of a magnetometer, data of a barometer, and the like that can be identified by an electronic device at a location.

Currently, many indoor parking lots are located in underground garages (such as the basement level 1 and the basement level 2), and positioning signals in the underground garages are weak. As a result, after a user parks a vehicle, the vehicle cannot be accurately located. Because an underground parking lot usually has a large area, when the user needs to use the vehicle again, the user usually needs to search for the vehicle based on memory. It is difficult and time-consuming for the user to accurately find a location of the vehicle.

In view of this, this application provides an indoor navigation method and an electronic device. In this technical solution, various data information may be obtained via an electronic device carried by a user, to record a track of the user from a getting-off point to an identified location. In this way, when the user subsequently arrives at the identified location again, the electronic device may provide corresponding direction and distance guidance for the user based on a previously obtained walking track, so that the user can conveniently find the location of a vehicle.

The indoor navigation method in this application may be mainly divided into a track recording phase and a track backtracking phase. In the track recording phase, the electronic device may record a track of the user from a getting-off point to a location identifier (for example, an elevator room, a location of going up an escalator, a location of going up a stair, or a location of an entrance of a shopping mall); or in the track backtracking phase, when the user arrives at the location identifier (an end point of the track) again, the electronic device may provide direction and distance guidance of a vehicle location for the user in response to an operation of the user, so that the user can quickly find the vehicle based on the guidance of the electronic device; or in the track backtracking phase, when the electronic device detects that the user passes by the location identifier, the electronic device has started to perform track backtracking, and when the user subsequently views the recorded track, the electronic device may display a current location of the user and a track obtained in the track recording phase. In this way, the user can quickly find the vehicle based on a guide of the electronic device.

It may be understood that the location identifier may also be understood as a location at which a moving state of the user changes.

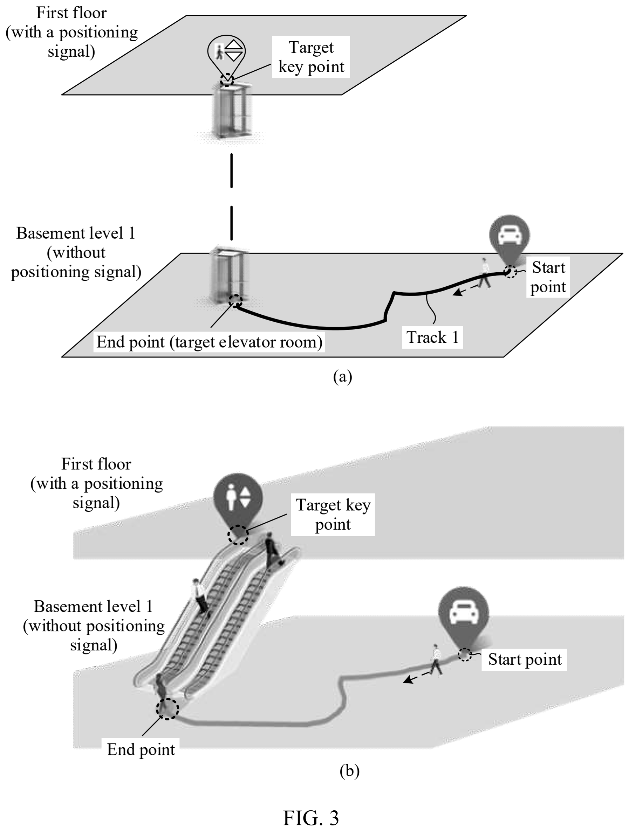

The following describes the technical solution of the track recording phase in this application with reference to FIG. 3 to FIG. 5.

FIG. 3 is a diagram of determining, by an electronic device, a track after a user gets off a vehicle according to an embodiment of this application.

As shown in (a) in FIG. 3, a vehicle of the user is parked on a basement level 1 of an underground garage, and there is no positioning signal or a positioning error is large on the basement level 1. In this scenario, the user needs to take an elevator from the basement level 1 to the first floor. In this case, the user has a requirement for determining a location of the vehicle.

In this application, when it is determined that a preset condition A is met, the electronic device may start to record a walking track of the user. When the user enters a target elevator room, the electronic device stops recording the walking track of the user. In this case, the location of the vehicle is a start point of the track, and a location of the target elevator room is an end point of the walking track of the user.

In some examples, the preset condition A may include but is not limited to the following conditions.

Condition 1: A gear of the vehicle is in a parking gear (P gear).

Condition 2: A communication connection between the electronic device and the vehicle is disconnected.

Condition 3: The vehicle is in a locked state.

For example, the electronic device is communicatively connected to the vehicle, so that the electronic device can obtain various statuses of the vehicle. When the electronic device detects that the vehicle is in the P gear, or is in the locked state, or the communication connection between the electronic device and the vehicle is disconnected, the electronic device may start to record the walking track of the user.

Condition 4: An operation that the user taps to start track recording is detected.

In some examples, after the electronic device detects the operation that the user taps to start track recording, the electronic device may start to record the walking track of the user.

It may be understood that, because the user wears the electronic device, or holds the electronic device in a hand, or places the electronic device in a pocket or a bag, the walking track that is of the user and that is recorded by the electronic device is a moving track of the electronic device.

In this application, the electronic device may record the track based on data of a sensor. Alternatively, the electronic device may record the track based on data of a sensor and location fingerprint information.

In an example, the electronic device may record the track based on the data of the sensor.

For example, the electronic device may include sensors such as an accelerometer, a gyro, a magnetometer, and a barometer. When the electronic device starts to record the track, the electronic device may obtain data of the sensors such as the accelerometer, the gyro, or the magnetometer, to determine information such as a pose and a moving direction of the electronic device, a step length and a step count of the user, so that the electronic device can determine relative displacement relative to a start location at each moment, to record a moving track of the electronic device, that is, the walking track of the user.

Alternatively, the electronic device may determine relative displacement of each moment relative to a previous moment based on data of various sensors, to record a moving track of the electronic device, that is, a walking track of the user. The moment herein may be a frequency at which the electronic device obtains the data of the sensor, or may be a moment in preset duration. This is not limited in embodiments of this application.

The posture of the electronic device may include the electronic device being in front of the chest of the user, in a pocket, in a phone posture, in a handheld posture, and the like.

It may be understood that the start point (or referred to as the start location) of the track is a location at which the electronic device starts to obtain data of various sensors to record the track, and the start point of the track may be considered as the location of the vehicle. It can be understood that, because a positioning signal of the underground garage is weak or a positioning error is large, the location does not refer to a location having longitude and latitude information, but the location may correspond to obtained data of various sensors. The electronic device cannot obtain specific longitude and latitude information.

The end point of the track may be located at an entrance of the target elevator room or a staircase. It may be understood that the end point of the track is not a point, and may be understood as an area, for example, an area near the entrance of the target elevator room.

In some implementations, the electronic device may determine the location of the end point based on a data change of the magnetometer. For example, at a location far away from the elevator room, the electronic device obtains a small variation via the magnetometer, and at a location close to the elevator room, the electronic device obtains a large variation via the magnetometer. When the electronic device enters an elevator or is in an elevator, a value obtained via the magnetometer is the smallest, so that the electronic device can determine an approximate location of the end point of the track based on the data change of the magnetometer.

In some implementations, the electronic device may determine the location of the end point of the track based on a data change of the barometer or the accelerometer or target information.

In an example, the electronic device may determine, based on that the data change of the barometer conforms to the following rule, an event that the user goes up and down the elevator (or the stair or the escalator).

Case 1: The absolute reading of the barometer increases or decreases by more than a threshold 1.

For example, if the absolute reading of the barometer increases by more than the threshold 1, the electronic device may determine that the user goes down the elevator, goes down the stair, or goes down the escalator; or if the absolute reading of the barometer decreases by more than a threshold 1, the electronic device may determine that the user goes up the elevator, goes up the stair, or goes up the escalator.

Case 2: The reading of the barometer increases or decreases by more than a threshold 2 within a period of time.

For example, if the reading of the barometer increases by more than the threshold 2 within a period of time, the electronic device may determine that the user goes down the elevator, goes down the stair, or goes down the escalator. If the reading of the barometer decreases by more than the threshold 2 within a period of time, the electronic device may determine that the user goes up the elevator, goes up the stair, or goes up the escalator.

In this case, the electronic device may determine a location (and/or fingerprint information and atmospheric pressure/altitude information at the location), as the end point of the track, of a time period T1 before a moment at which the case 1 or the case 2 is detected.

It should be understood that the time T1 may be fixed duration, or may be a period of time in which the electronic device fails to detect that a long-distance movement occurs. For example, long-distance movement may be understood as that a movement distance of the electronic device is greater than a preset value.

In another example, the electronic device may further determine, based on that a data change of the accelerometer conforms to the following rule, an event that the user goes up and down an elevator or goes up and down a stair.

Case 1: A change of a three-axis value of the accelerometer in a vertical direction conforms to the target rule. For example, a target rule 1 is that the acceleration first increases (overweight) in the vertical direction and then decreases (weightless), and it may be determined that the user takes the elevator upward; and a target rule 2 is that the acceleration first decreases (weightless) in the vertical direction and then increases (overweight), and it may be determined that the user takes the elevator downward.

In this case, the electronic device may determine a location (and/or fingerprint information and atmospheric pressure/altitude information at the location), as the end point of the track, of a time period T2 before a moment at which the case 1 is detected.

It should be understood that the time T2 may be fixed duration, or may be a period of time in which the electronic device fails to detect that a long-distance movement occurs. For example, long-distance movement may be understood as that a movement distance of the electronic device is greater than a preset value.

In another example, the target information includes a strength of a cellular network signal or floor information, and the electronic device may further determine the end point of the track based on the strength of the cellular network signal or the floor information.

Case 1: A change of the strength of the cellular network signal conforms to a target rule 2. For example, the target rule 2 is that the strength of the cellular network signal first decreases and then increases within a period of time.

Case 2: Location (location) information obtained by the electronic device includes the floor information, and it may be directly determined, based on the floor information, that a floor changes.

For example, information about each floor is provided in some shopping malls or buildings. When the electronic device is located on different floors, the electronic device may obtain the floor information.

In this case, the electronic device may determine a location (and/or fingerprint information and atmospheric pressure/altitude information at the location), as the end point of the track, of a time period T1 before a moment at which the case 1 or the case 2 is detected.

It should be understood that the time T1 may be fixed duration, or may be a period of time in which the electronic device fails to detect that a long-distance movement occurs. For example, long-distance movement may be understood as that a movement distance of the electronic device is greater than a preset value.

In this way, the electronic device may record a track of the user from a getting-off point to a location identifier (for example, the target elevator room, the staircase, or the escalator). It should be understood that the track records the location of the vehicle and a relative location of the location identifier.

In another example, the electronic device may further record a track based on data of the sensor and location fingerprint information.

For example, the sensor may include the accelerometer, the gyro, the magnetometer, the barometer, and the like. The location fingerprint information may include the strength of the wireless signal obtained by the electronic device, for example, the strength of a Wi-Fi signal or the strength of a Bluetooth signal, and may further include a strength of a geomagnetic signal. For a manner in which the electronic device records the track, refer to the foregoing related descriptions. Because the electronic device obtains more data, the track that is of the user from the location at which the user gets off the vehicle to the location of the target elevator room or the staircase and that is recorded by the electronic device is more accurate.

It should be understood that, because there is no positioning signal or a positioning signal is weak on the basement level 1, but there is a positioning signal on the first floor, when the user takes the elevator from the basement level 1 to the first floor, after the user leaves the elevator, the electronic device may obtain an accurate positioning signal (for example, longitude and latitude information). In this way, the electronic device may use the location at which the user leaves the elevator as the target key point, so that the electronic device can subsequently provide guidance on the location of the elevator room for the user.

In this embodiment of this application, because the electronic device has recorded the track 1 of the user from a getting-off point to the target elevator room, and the electronic device records the location (that is, the target key point) at which the user leaves the target elevator room. In this way, when the user subsequently searches for a vehicle, the user may successfully arrive at the location of the elevator based on the location of the target elevator room, and after the user takes the elevator and leaves the elevator, the electronic device may provide direction and distance guidance for the user based on the current location and the originally recorded track 1.

As shown in (b) in FIG. 3, a vehicle of a user is parked on the basement level 1 of an underground garage, and there is no positioning signal or a positioning error is large on the basement level 1. After the user gets off the vehicle, the user needs to take an escalator or a stair to a shopping mall on the first floor. In this case, the user has a requirement for determining a location of the vehicle.

Similarly, the electronic device may record the walking track of the user based on data of the sensor. Alternatively, the electronic device may record the track based on data of the sensor and location fingerprint information.

In a process in which the electronic device records the walking track of the user, when the user does not take the escalator, data of the barometer obtained by the electronic device changes slightly; or when the user takes the escalator, data of the barometer obtained by the electronic device changes greatly. In this way, the electronic device may determine, based on a data change of the barometer, a location at which the user goes up the escalator, and may use the location at which the user goes up the escalator as the end point of the recorded track 1.

It should be understood that, because there is no positioning signal on the basement level 1, but there is a positioning signal on the first floor, when the user takes the escalator from the basement level 1 to the first floor, after the user leaves the escalator, the electronic device may obtain an accurate positioning signal (for example, longitude and latitude information). In this way, the electronic device may use the location at which the electronic device leaves the escalator as the target key point, so that the electronic device can subsequently provide guidance on the location of the escalator for the user.

In this embodiment of this application, because the electronic device has recorded the track 1 of the user from a getting-off point to going up the escalator, and the electronic device records the location (that is, the target key point) at which the user leaves the escalator. In this way, when the user subsequently searches for the vehicle, the user may successfully arrive at the escalator based on a location of the escalator, and after the user takes the escalator and leaves the escalator, the electronic device may provide direction and distance guidance for the user based on a current location and the originally recorded track 1.

It may be understood that the basement level 1 and the first floor in FIG. 3 are merely examples. In an actual scenario, the vehicle may be located on any floor without a positioning signal. For example, the vehicle may alternatively be located on the basement level 2 or the basement level 3. The first floor with a positioning signal may alternatively be any floor with a positioning signal. This is not limited in embodiments of this application.

It may be understood that, when the user takes the stair from the basement level 1 to the first floor, the electronic device may determine, according to a change rule of the accelerometer, a location at which the user goes up the stair, so that the location at which the user goes up the stair may be used as an end point of the track, and the location at which the user leaves the stair may be used as the target key point.

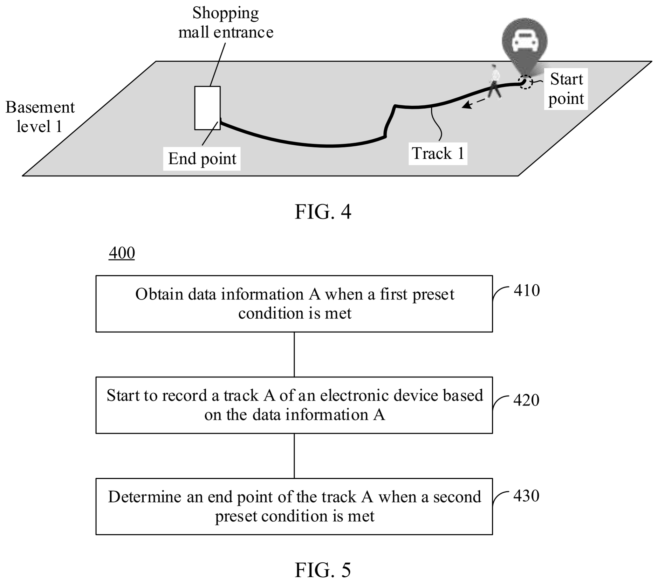

In some cases, the end point of the track and the target key point may alternatively be at a same location. This technical solution is described below with reference to FIG. 4.

FIG. 4 is a diagram of determining, by an electronic device, a track after a user gets off a vehicle according to an embodiment of this application. As shown in FIG. 4, the vehicle of the user is parked on the basement level 1 of an underground garage, and there is no positioning signal or a positioning error is large on the basement level 1. After the user gets off the vehicle, the user does not need to take an elevator or an escalator, and may directly enter a shopping mall from the basement level 1. In this case, the user has a requirement for determining a location of the vehicle.

It may be understood that, after the user enters the shopping mall with the electronic device, the user can obtain accurate positioning information (for example, longitude and latitude information), but cannot obtain accurate positioning information before the user enters the shopping mall. Therefore, a location at which the electronic device can obtain accurate positioning information may be at an end point of a track.

It may be understood that, because the positioning information also has some errors, the end point of the track may correspond to a small area instead of a point.

It should be understood that the electronic device may record a track 1 according to a same track recording method as the foregoing. In this case, a target key point and the end point of the track may be a same point.

When the user needs to use the vehicle again subsequently, if the user is located at another location, the electronic device may provide guidance on a location of the shopping mall entrance for the user, so that the user can smoothly arrive at the shopping mall entrance, that is, the end point of the track. Then, the electronic device provides direction and distance guidance for the user based on the current location and the originally recorded track 1, so that the user can quickly find the vehicle.

FIG. 5 is a schematic flowchart of a method for recording a track according to an embodiment of this application. As shown in FIG. 5, the method 400 may be applied to an electronic device, and the method 400 includes step 410 to step 430.

410: The electronic device obtains data information A when a first preset condition is met.

For example, the first preset condition may be the foregoing preset condition A. For details, refer to the foregoing related descriptions.

The electronic device may obtain the data information A when the first preset condition is met, where the data information A may be various types of data obtained via a sensor. For example, the sensor may include the foregoing accelerometer, gyro, magnetometer, barometer, and the like.

The data information A may further include location fingerprint information obtained by the electronic device. For example, the location fingerprint information may be a strength of a wireless signal, for example, a strength of a Wi-Fi signal or a strength of a Bluetooth signal obtained by the electronic device at a current location.

It should be understood that the data information A may further include other information, for example, an ultra-wideband UWB signal. This is not limited in embodiments of this application.

420: The electronic device starts to record a track A of the electronic device based on the data information A.

The electronic device may start to record the track A of the electronic device based on the obtained data information A, and a start point of the track A may be considered as a location of the vehicle. As a user moves, the data information A obtained by the electronic device changes, and the electronic device may record the track A of the electronic device in real time based on latest obtained data information.

In an example, the electronic device may determine a location point based on data information A obtained at each moment, and record relative displacement between the location point and the start location point, to obtain a track of the electronic device from the start moment to the moment.

In another example, the electronic device may determine a location point based on data information A obtained at each moment, and record relative displacement between a location point the moment and a location point at a previous moment, to obtain a track of the electronic device from the start moment to the moment.

In another example, the electronic device may further record each point in a walking process of the user, and determine the track of the electronic device in a curve fitting manner.

It should be understood that each moment herein may be a moment at which the sensor of the electronic device collects data. Alternatively, the moment may be a moment at which every one second, every two seconds, or the like is located.

In some examples, the track A may be further displayed in real time in a display interface of the electronic device, to help the user determine a walking track of the user.

It may be understood that the track A may also be understood as the walking track of the user.

430: The electronic device determines an end point of the track A when a second preset condition is met.

For example, the second preset condition may include but is not limited to at least one of the following conditions:
a change value of data that is of a magnetometer and that is obtained by the electronic device is greater than a second threshold;
a change of data that is of an accelerometer and that is obtained by the electronic device conforms to a rule;
the electronic device is able to obtain accurate positioning information; or
a floor on which the electronic device is located changes.

That the floor on which the electronic device is located changes may be determined by the electronic device based on a change of data of a barometer, or may be determined by the electronic device by obtaining floor information provided by a shopping mall.

For example, the electronic device may determine the end point of the track A based on the change of the obtained data of the magnetometer. As shown in (a) in FIG. 3, the end point of the track A may be a location at which the user is located before the user enters a target elevator room. For details, refer to the foregoing descriptions.

Alternatively, the electronic device may determine the end point of the track A by determining that the floor changes. As shown in (b) in FIG. 3, the end point of the track A may be a location at which the user is located before the user enters an escalator. For details, refer to the foregoing descriptions.

Alternatively, the electronic device may determine the end point of the track A by using the change of the obtained data of the accelerometer, and the end point of the track A may be a location at which the user is located before the user enters the stair.

Alternatively, the electronic device may determine the end point of the track A by obtaining accurate positioning information. As shown in FIG. 4, the end point of the track A may be a location of a shopping mall entrance. For details, refer to the foregoing descriptions.

Based on this embodiment of this application, the electronic device may obtain data information of various sensors and/or data information of a radio signal when the first preset condition is met, record the moving track A of the electronic device based on the obtained data information, and determine the end point of the track A when the second preset condition is met. In this way, the electronic device may obtain a walking track of the user from a location at which the user gets off the vehicle to an identified location (an end point of the track). Therefore, when the user subsequently searches for the vehicle, the electronic device may start to record the track of the user again at the end point of the track or when the user passes through a technical point of the track, to determine a current location of the user and a relative location of the track A, to provide direction and distance guidance for the user to search for a vehicle.

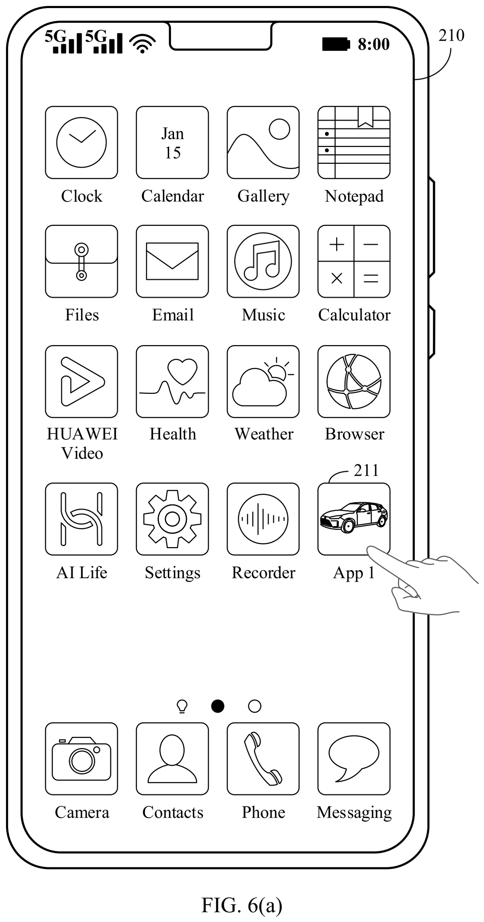

FIG. 6(a) to FIG. 6(c) are a diagram of a group of graphical user interfaces (graphical user interfaces, GUIs) according to an embodiment of this application. FIG. 6(a) to FIG. 6(c) show a process of providing an elevator room location guide for a user.

As shown in FIG. 6(a), the GUI may be a display interface 210 of an electronic device 200. The display interface 210 may be a display home screen of the electronic device 200, and the display interface 210 may include a plurality of applications installed on the electronic device 200.

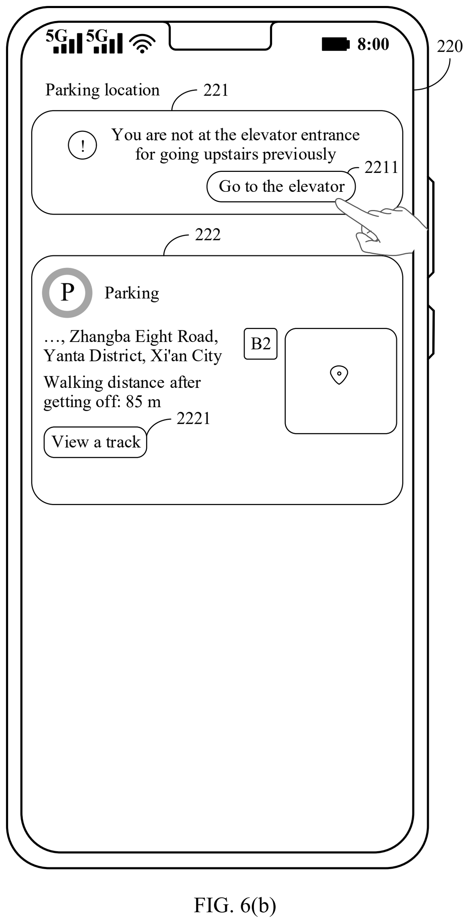

For example, after the electronic device 200 detects an operation of tapping an application icon 211 of an application (Application, App) 1 by the user, a GUI shown in FIG. 6(b) may be displayed.

For example, the App 1 may be used by the user to perform parking management. The user may view, on the App 1, a parking location of a vehicle, parking duration, a track from parking to taking an elevator by the user, and the like.

As shown in FIG. 6(b), the GUI may be a display interface 220 about a parking location in the App 1. The display interface 220 may include at least a prompt widget 221 and a parking details widget 222.

The prompt widget 221 may include prompt content "You are not at the elevator entrance that is used to go upstairs previously" and a "Go to the elevator" function button 2211.

It should be understood that the text content included in the prompt content is merely an example. In another example, the text content included in the prompt content may alternatively be other content. For example, the prompt content may alternatively be "Your current location is not in a place where you just went upstairs", "Your current location is not in a correct elevator entrance", or the like. This is not limited in embodiments of this application.

For example, the electronic device 200 may determine whether the current location is at an end point of the track.

A manner in which the electronic device 200 determines whether the current location is at the end point of the track may include at least one of the following.

### Method 1: Matching based on fingerprint information (such as Wi-Fi, Bluetooth, and geomagnetic)

If similarity between fingerprint information 1 at the current location and fingerprint information 2 at the end point of the track is greater than a threshold, it may be determined that the current location is at the end point of the track. If similarity between fingerprint information 1 at the current location and fingerprint information 2 at the end point of the track is not greater than a threshold, the electronic device may determine that the current location is not at the end point of the track.

### Method 2: Matching based on barometric pressure data

If a difference between barometric pressure data 1 at the current location and barometric pressure data 2 at the end point of the track is less than a threshold, it may be determined that the current location is at the end point of the track. If a difference between barometric pressure data 1 at the current location and barometric pressure data 2 at the end point of the track is not less than a threshold, the electronic device may determine that the current location is not at the end point of the track.

In another example, the electronic device may further determine, based on altitude information, that the current location is not at the end point of the track.

Method 3: When the electronic device can obtain accurate positioning data, the electronic device continuously obtains (or obtains at a specific time interval according to a specific rule) longitude and latitude coordinates of the electronic device; and when detecting a floor change event, the electronic device compares whether a distance between a location that is of the electronic device and that is obtained for the last time and a target key point is less than a threshold. If the distance is less than the threshold, it is determined that the current location is at the end point of the track.

It should be understood that the method 3 may be further combined with the method 1 or the method 2, so that the electronic device can accurately obtain a floor on which the vehicle is located.

The parking details widget 222 may include approximate positioning of a location of the vehicle, a local map including the approximate location of the vehicle, a distance from the user getting off the vehicle to walking to the elevator entrance, and a "View a track" function button 2221.

It should be understood that the track may be a walking track of the user getting off the vehicle to an elevator (or an escalator or a stair) entrance. Alternatively, the track may be a walking track of the user from a location at which the user gets off the vehicle to a location at which an accurate positioning signal can be obtained.

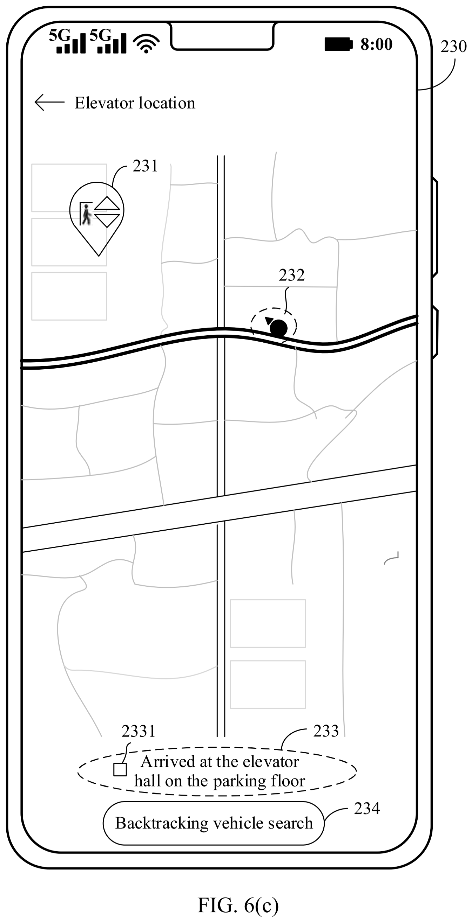

For example, after the electronic device 200 detects an operation of tapping a "Go to the elevator" function button 221 by the user, the electronic device 200 may display a GUI shown in FIG. 6(c).

As shown in FIG. 6(c), the GUI may be a display interface 230 used by the electronic device 200 to display a location of the elevator entrance. The display interface 230 may include an indication icon 231 of the elevator room and an indication icon 232 of a current location of the user.

In this way, when the electronic device determines that the current location of the user is not at the previously recorded location of the elevator room, the electronic device may provide corresponding guidance for the user, and the user may determine a location of the indication icon of the elevator room on the map, so that the user can quickly determine the location of the elevator room, thereby bringing good user experience.

The electronic device determines, based on obtained data of a sensor (for example, a magnetometer) or location fingerprint information, whether the location of the electronic device is at the end point of the track. In some cases, some errors may exist due to a location deviation or interference from a building, as a result, the user has reached a place in the target elevator room that is previously upstairs, but the electronic device determines, based on data, that the user is not in the target elevator room. In this case, the electronic device may provide a manual selection option for the user in the display interface, so that fault tolerance can be improved to some extent.

Therefore, the display interface 230 may further include prompt content "Arrived at the elevator hall on the parking floor" 233, a function option box 2331, and a "Backtracking vehicle search" function button 234.

It may be understood that the user may manually select the function option box 2331, so that the electronic device 200 determines that the current location of the user is already in the target elevator room. After the electronic device 200 detects an operation that the user taps the "Backtracking vehicle search" function button 234, the electronic device 200 may display, in a new display interface, direction guidance, a distance indication, and the like from a current location to a vehicle location.

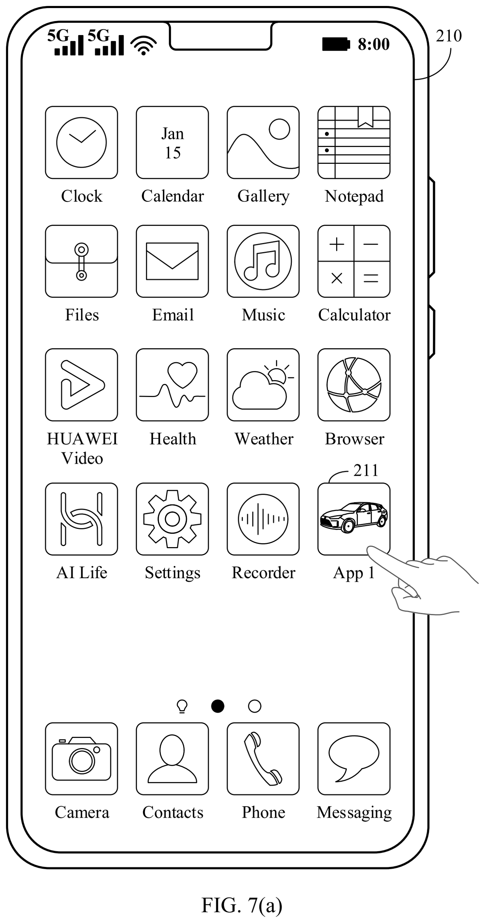

FIG. 7(a) to FIG. 7(e) are a diagram of another group of GUIs according to an embodiment of this application. FIG. 7(a) to FIG. 7(e) show a process in which an electronic device provides vehicle location guidance for a user.

It should be understood that, for FIG. 7(a), refer to related descriptions of FIG. 6(a). For brevity, details are not described herein again.

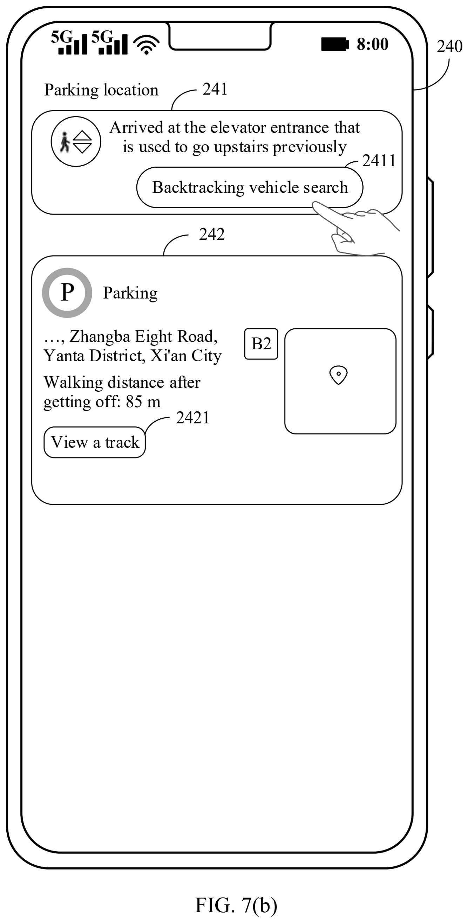

After the electronic device determines that a current location of the user is located at an elevator entrance that is previously used to go upstairs, after the electronic device 200 detects an operation of tapping an application icon 211 of an App 1 by the user, a GUI shown in FIG. 7(b) may be displayed.

As shown in FIG. 7(b), the GUI may be a display interface 240 about a parking location in the App 1. The display interface 240 may include at least a prompt widget 241 and a parking details widget 242.

The prompt widget 241 may display an icon of an elevator room, text content "Arrived at the elevator entrance for going upstairs previously ", and a "Backtracking vehicle search" function button 2411.

It should be understood that, for the parking details widget 242, refer to related descriptions of the widget 222.

It may be understood that the text content is merely an example.

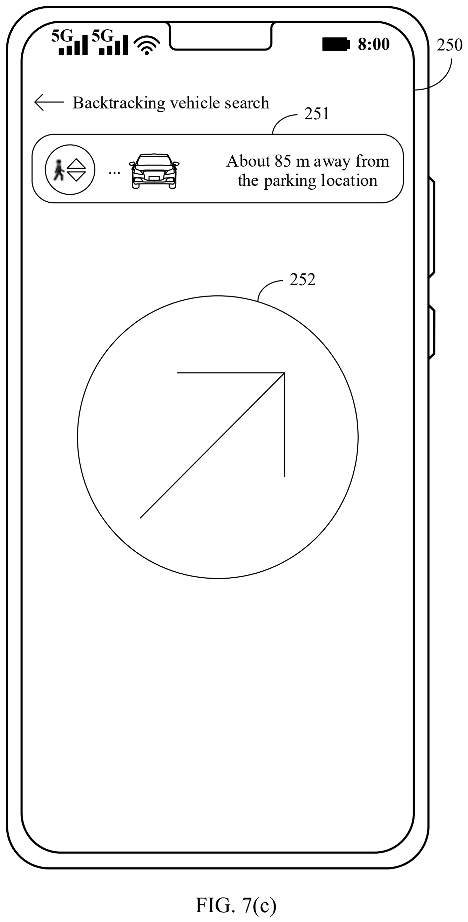

After the electronic device 200 detects an operation of tapping the "Backtracking vehicle search" function button 2411 by the user, a GUI shown in FIG. 7(c) may be displayed.

As shown in FIG. 7(c), the GUI may be a display interface 250 on which the electronic device displays prompt information. The display interface 250 may include a widget 251 and an icon 252 of a prompt direction.

The widget 251 may include an icon of an elevator room, an icon of a vehicle, and a distance between the elevator room and the vehicle. For example, text content displayed on the widget 251 may be "about 85 m away from the parking location". It should be understood that the distance displayed herein is a distance that is from the parking location to the elevator room and that is previously recorded by the electronic device 200, that is, a length of a walking track after the user gets off the vehicle.

The icon 252 of the prompt direction may be a direction for guiding the parking location of the vehicle, so that a specific pointing direction can be provided for the user to search for the vehicle.

In some other examples, the display interface 250 may alternatively not include the widget 251.

When the user moves in the direction prompted by the electronic device 200, the direction and the distance in the display interface 250 may be updated in real time.

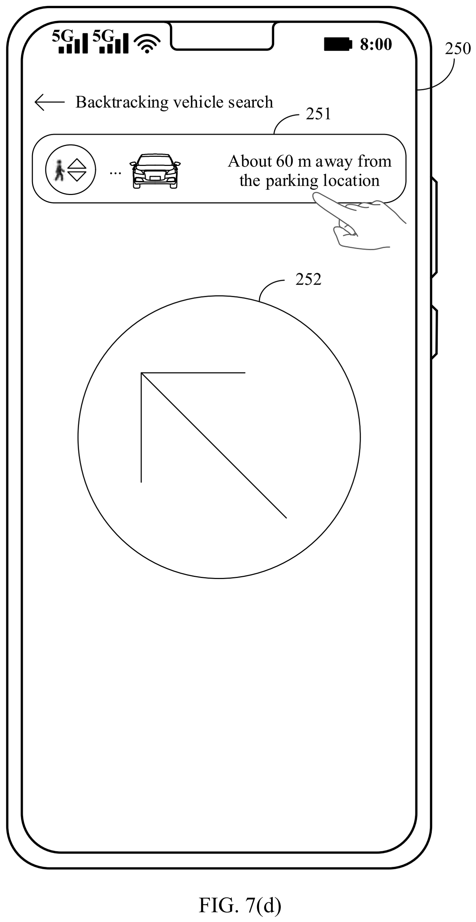

As shown in FIG. 7(d), a distance to a location of the vehicle in the widget 251 in the display interface 250 is updated to 60 m, and the direction indicated by the icon 252 of the prompt direction always points to the location of the vehicle.

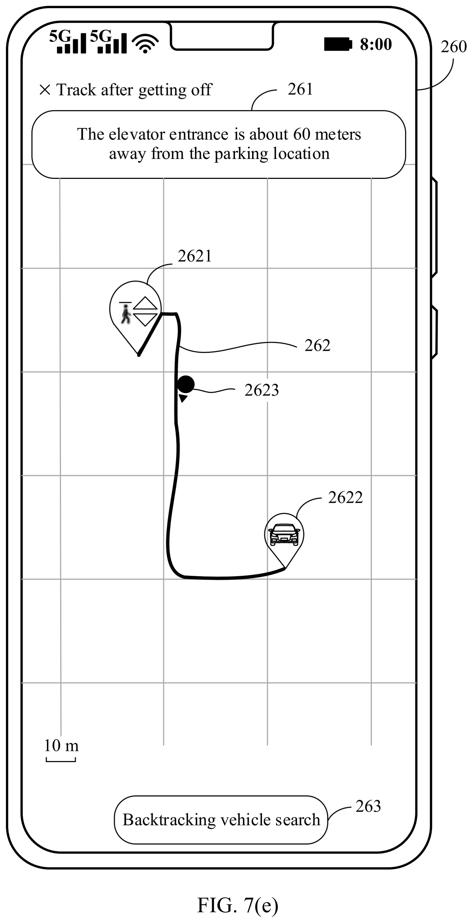

After the electronic device 200 detects an operation of tapping the widget 251 by the user, a GUI shown in FIG. 7(e) may be displayed.

As shown in FIG. 7(e), the GUI is a display interface 260 that displays a walking track of the user from a getting-off point to the elevator room.

The display interface 260 may include a distance prompt widget 261, a walking track 262, and a "Backtracking vehicle search" function button 263.

The display interface 260 may further include an icon 2621 (an end point of the track) of a location of the elevator room, an icon 2622 (a start point of the track) of a location of the vehicle, and an icon 2623 indicating a current location and a current direction of the user.

Because the vehicle is parked in an underground garage or an indoor area, and a positioning signal of the vehicle in the underground garage or the indoor area is weak or there is no positioning signal in the underground garage or the indoor area, the vehicle cannot be accurately located. However, in this application, when a first preset condition is met, the electronic device may obtain data of a plurality of sensors and/or location fingerprint information of the location of the electronic device, to determine a movement track 1 of the electronic device. A start point of the track 1 may be considered as the location of the vehicle, an end point of the track 1 may be a location at which the user goes up an elevator or an escalator or enters a shopping mall. When the user subsequently arrives at a location (for example, the elevator entrance) at which the end point of the track 1 is located, the electronic device may display the track 1 by performing a track viewing operation. In a process in which the user moves based on the track 1, the electronic device may also determine the location of the user and the current forward direction based on the data of the plurality of sensors and/or the location fingerprint information of the location of the electronic device, and after the location of the user and the current forward direction are compared with the location of the user and the current forward direction with the previously generated track 1, the current location of the user may be displayed in the track 1.

In this way, even if the vehicle does not have an accurate positioning signal, the user can conveniently view the location of the vehicle and the current location of the user, to provide vehicle search guidance for the user. When the user performs backtracking to search for a vehicle, the electronic device may provide a direction and a distance indication of the vehicle for the user, to help the user conveniently search for the vehicle.

In another example, after the electronic device 200 detects an operation of tapping a "View a track" function button 2421 in the parking details widget 242 in the display interface 240 by the user, a GUI shown in FIG. 7(e) may also be displayed. In this case, text content "The elevator entrance is about 85 m away from the parking location" is displayed in the widget 261 displayed in the display interface 260, and the icon 2623 indicating the location of the user is located near the icon 2621.

In some other examples, after the technical solution shown in FIG. 6(c), when the user walks to the location of the elevator room based on the guidance of the elevator room, and after the electronic device 200 detects an operation of returning to a previous interface, a GUI shown in FIG. 7(b) may be displayed.

In the embodiment shown in FIG. 6(a) to FIG. 7(e), the user may tap the application icon of the App 1 to enter the display interface for vehicle management. In some cases, an entrance of the vehicle management may alternatively be located in a leftmost screen of the electronic device.

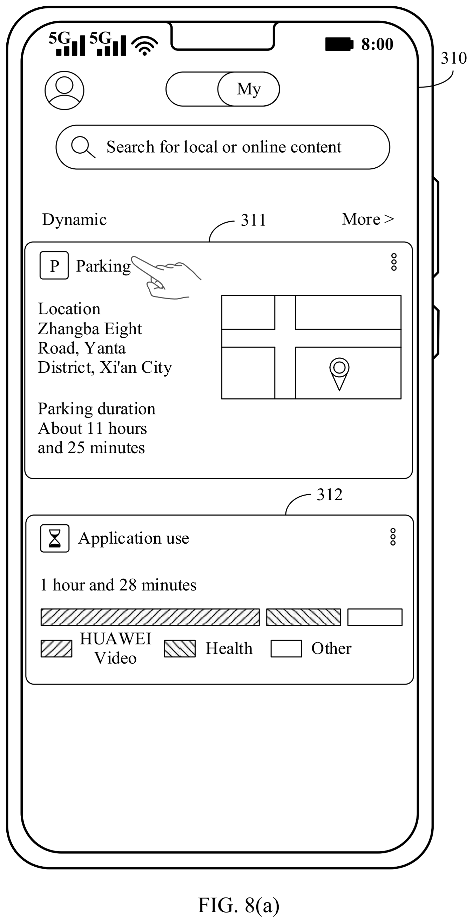

For example, FIG. 8(a) to FIG. 8(d) are a diagram of another group of GUIs according to an embodiment of this application. FIG. 8(a) to FIG. 8(d) show a process in which an electronic device provides vehicle location guidance for a user.

As shown in FIG. 8(a), the GUI is a display interface 310 of a leftmost screen of an electronic device 300. The display interface 310 may include at least a parking widget 311, an application use widget 312, a search function box, and the like.

The parking widget 311 may include information such as a parking location, parking duration, and a thumbnail map of a location of a vehicle.

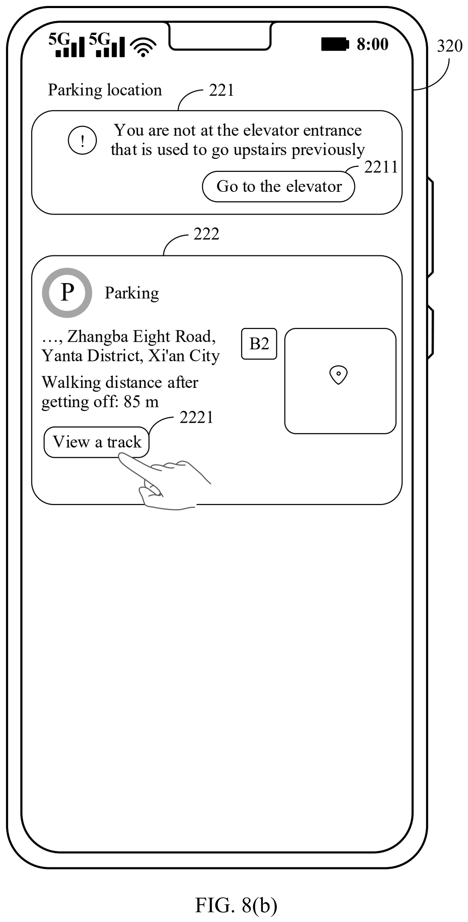

After the electronic device 300 detects an operation of tapping the parking widget 311 by the user, a GUI shown in FIG. 8(b) may be displayed.

It should be understood that, for FIG. 8(b), refer to related descriptions of FIG. 6(b). For brevity, details are not described again.

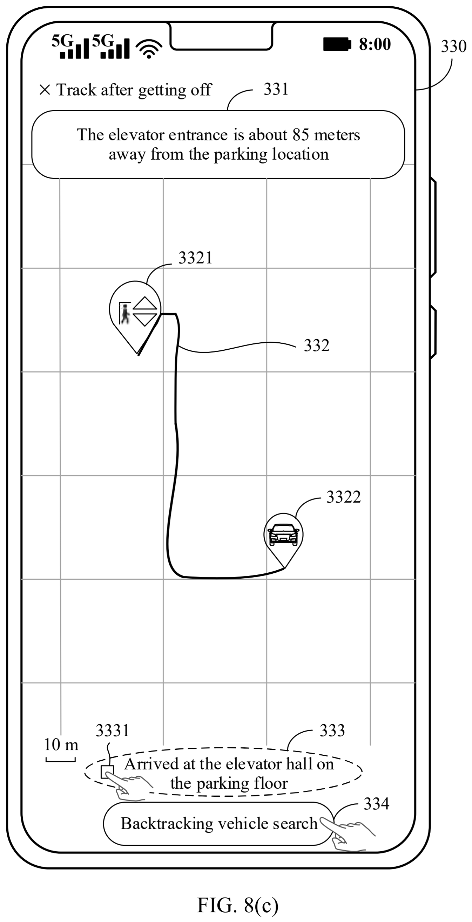

After the electronic device 300 detects an operation of tapping "View a track" 2221 by the user, a GUI shown in FIG. 8(c) may be displayed.

The electronic device determines, based on obtained data of a sensor (for example, a magnetometer) or location fingerprint information, whether the location of the electronic device is at the end point of the track. In some cases, some errors may exist due to a location deviation or interference from a building, as a result, the user has reached a place in the target elevator room that is previously upstairs, but the electronic device determines, based on data, that the user is not in the target elevator room. In this case, the electronic device may provide a manual selection option for the user in the display interface, so that fault tolerance can be improved to some extent.

As shown in FIG. 8(c), the GUI may be a display interface 330 that displays a track of the user getting off the vehicle. The display interface 330 may include a distance prompt widget 331, a walking track 332, prompt content "Arrived at the elevator hall on the parking floor" 333, a function option box 3331, and a "Backtracking vehicle search" function button 334.

To make the vehicle indication clearer, the display interface 330 may further include an icon 3321 (an end point of the track) of the location of the elevator room and an icon 3322 (a start point of the track) of the location of the vehicle. In this way, the user can determine the elevator room and a relative location of the vehicle.

If the user determines that the current location is already in the target elevator room, the user may tap the function option box 3331. In response to an operation of tapping the function option box 3331 by the user, the electronic device may determine that the current location is in the target elevator room, to provide direction guidance for the user.

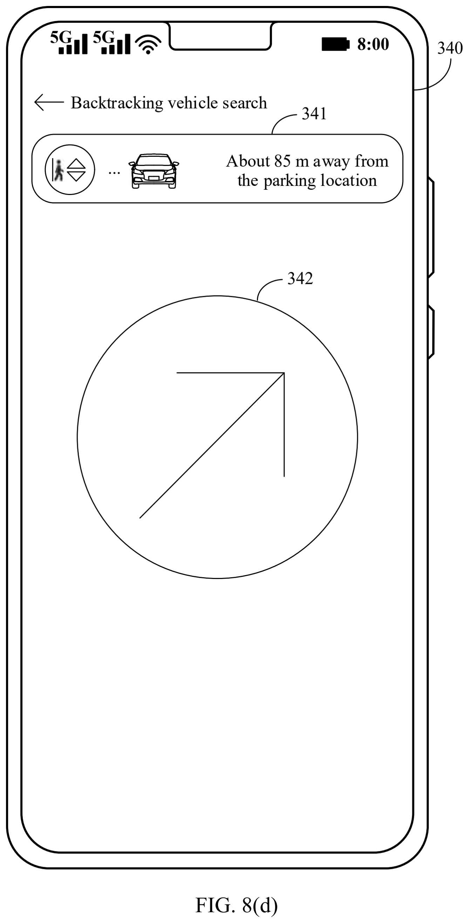

After the electronic device detects an operation of tapping the "Backtracking vehicle search" function button 334 by the user, the electronic device may display a GUI shown in FIG. 8(d).

As shown in FIG. 8(d), the GUI may be a display interface 340 on which the electronic device displays prompt information. The display interface 340 may include a widget 341 and an icon 342 of a prompt direction.

The widget 341 may include an icon of an elevator room, an icon of a vehicle, and a distance between the elevator room and the vehicle. For example, text content displayed on the widget 341 may be "about 85 m away from the parking location". It should be understood that the distance displayed herein is a distance that is from the parking location to the elevator room and that is previously recorded by the electronic device 300, that is, a length of a walking track after the user gets off the vehicle.

The icon 342 of the prompt direction may be a direction for guiding the parking location of the vehicle, so that a specific pointing direction can be provided for the user to search for the vehicle.

In some other examples, the display interface 340 may alternatively not include the widget 341.

When the user moves in the direction prompted by the electronic device 300, the direction and the distance in the display interface 340 may be updated in real time.

Based on this embodiment of this application, when the electronic device determines that there is a specific error, the user may manually determine that the current location is near the target elevator room, so that fault tolerance of the electronic device can be improved.

In some cases, when the electronic device determines that the current location of the user is not in the target elevator room (the end point of the track), and the user taps the parking widget to enter the display interface for managing the location of the vehicle, the display interface may alternatively be displayed in another form. This technical solution is described below with reference to FIG. 6(a) to FIG. 7(e).

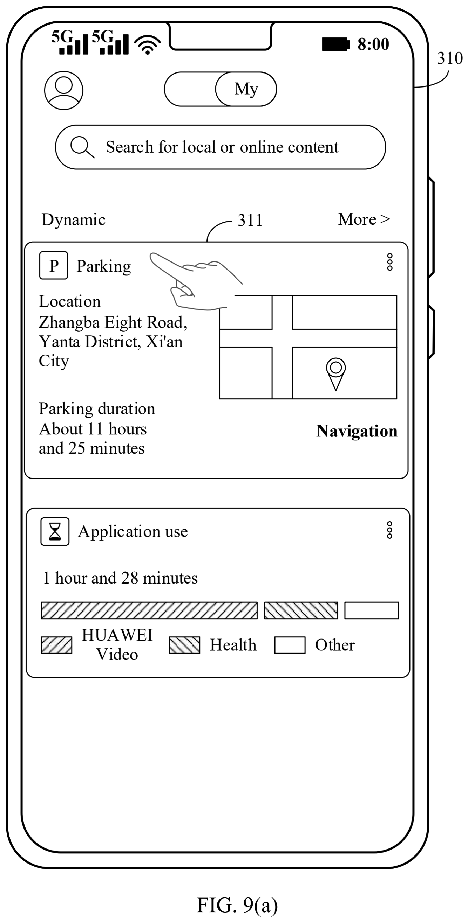

For example, FIG. 9(a) to FIG. 9(c) are a diagram of another group of GUIs according to an embodiment of this application. FIG. 9(a) to FIG. 9(c) show a process in which an electronic device provides location guidance of an elevator room for a user.

It should be understood that, for FIG. 9(a), refer to related descriptions of FIG. 8(a). For brevity, details are not described herein again.

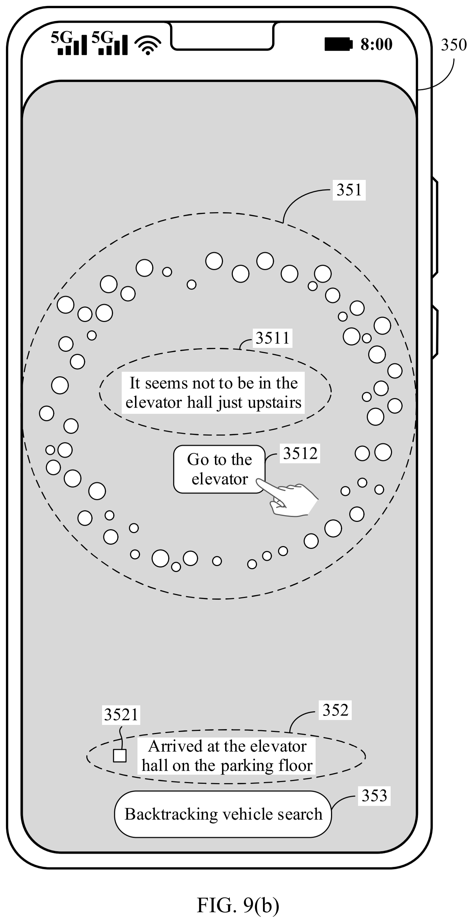

After the electronic device 300 detects an operation of tapping the parking widget 311 by the user, a GUI shown in FIG. 9(b) may be displayed.

As shown in FIG. 9(b), the GUI may be a display interface 350 of the electronic device. The display interface may include a particle cloud image 351, prompt content "Arrived at the elevator hall on the parking floor" 352, a function option box 3521, and a "Backtracking vehicle search" function button 353.

For example, the particle cloud image 351 may include text content "It seems not to be in the elevator hall just upstairs" and a "Go to the elevator" function button 3512.

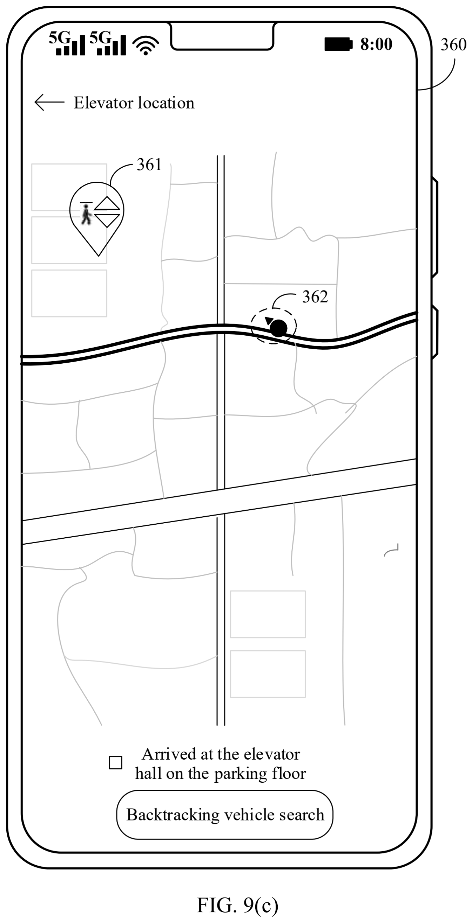

After the electronic device 300 detects an operation of tapping the "Go to the elevator" function button 3512 by the user, the electronic device 300 may display a GUI shown in FIG. 9(c).

As shown in FIG. 9(c), the GUI may be a display interface 360 used by the electronic device 300 to display a location of the elevator room. The display interface 360 may include an indication icon 361 of the elevator room and an indication icon 362 of a current location of the user.

In this way, when the electronic device determines that the current location of the user is not at the previously recorded location of the elevator room, the electronic device may provide corresponding guidance for the user, and the user may determine a location of the indication icon of the elevator room on the map, so that the user can quickly determine the location of the elevator room, thereby bringing good user experience.

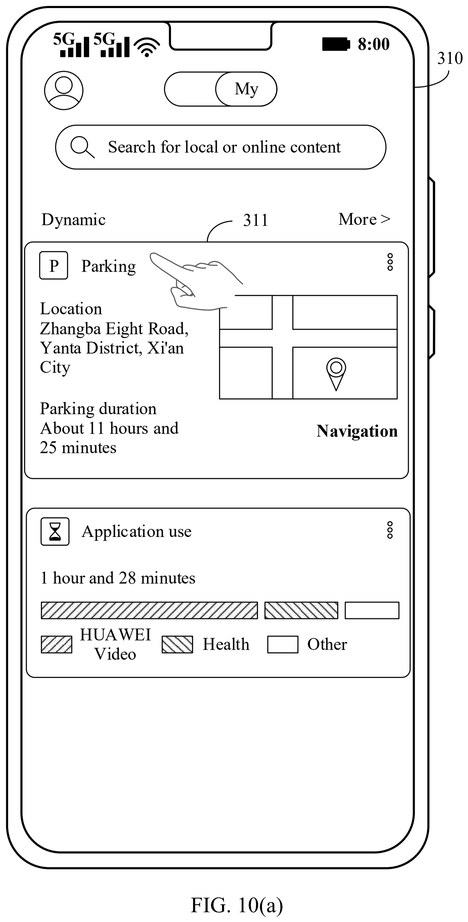

For example, FIG. 10(a) to FIG. 10(c) are a diagram of another group of GUIs according to an embodiment of this application. FIG. 10(a) to FIG. 10(c) show a process in which an electronic device provides vehicle location guidance for a user.

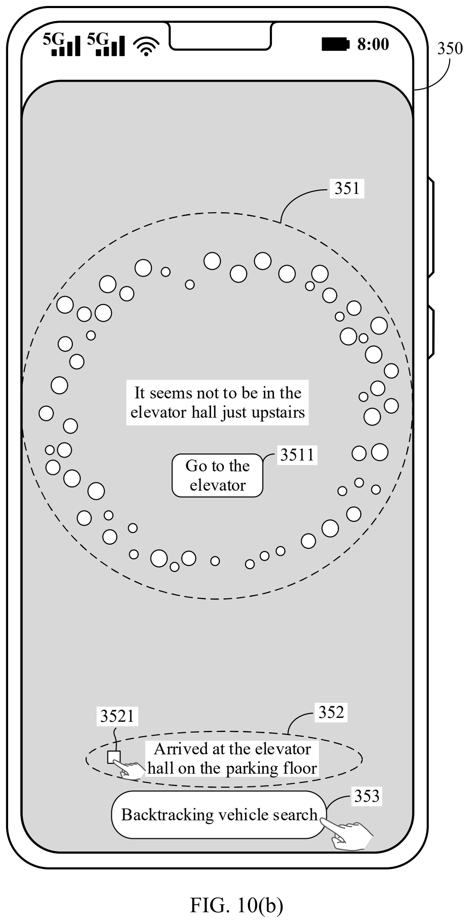

It should be understood that for FIG. 10(a) and FIG. 10(b), refer to related descriptions of FIG. 9(a) and FIG. 9(b). For brevity, details are not described herein again.

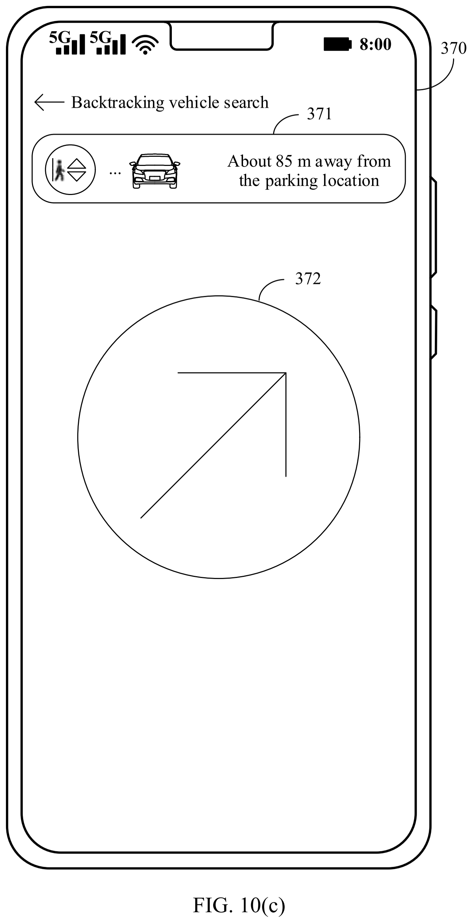

After the electronic device 300 detects an operation of tapping a function option box 3521 by the user, the electronic device 300 may determine that the current location of the user is near a target elevator room. In this case, after detecting an operation that the user taps a "Backtracking vehicle search" function button 353, the electronic device 300 may display a GUI shown in FIG. 10(c).

As shown in FIG. 10(c), the GUI may be a display interface 370 on which the electronic device displays prompt information. The display interface 370 may include a widget 371 and an icon 372 of a prompt direction.

The widget 371 may include an icon of an elevator room, an icon of a vehicle, and a distance between the elevator room and the vehicle. For example, text content displayed on the widget 371 may be "about 85 m away from the parking location". It should be understood that the distance displayed herein is a distance that is from the parking location to the elevator room and that is previously recorded by the electronic device 300, that is, a length of a walking track after the user gets off the vehicle.

The icon 372 of the prompt direction may be a direction for guiding the parking location of the vehicle, so that a specific pointing direction can be provided for the user to search for the vehicle.

In some other examples, the display interface 370 may alternatively not include the widget 371 or the icon 372.

When the user moves in the direction prompted by the electronic device 300, the direction and the distance in the display interface 370 may be updated in real time.

Based on this embodiment of this application, when the electronic device determines that there is a specific error, the user may manually determine that the current location is near the target elevator room, so that fault tolerance of the electronic device can be improved. When the user performs backtracking to search for a vehicle, the electronic device may provide a direction and a distance indication of the vehicle for the user, to help the user conveniently search for the vehicle.

In some cases, when the user is near the target elevator room, for example, when the user gets off the elevator and prepares to search for a vehicle, if the electronic device determines that the current location of the user is near the target elevator room (an end point of the track), when the user taps the parking widget, the electronic device may directly display a display interface in which the user indicates the direction of the vehicle.

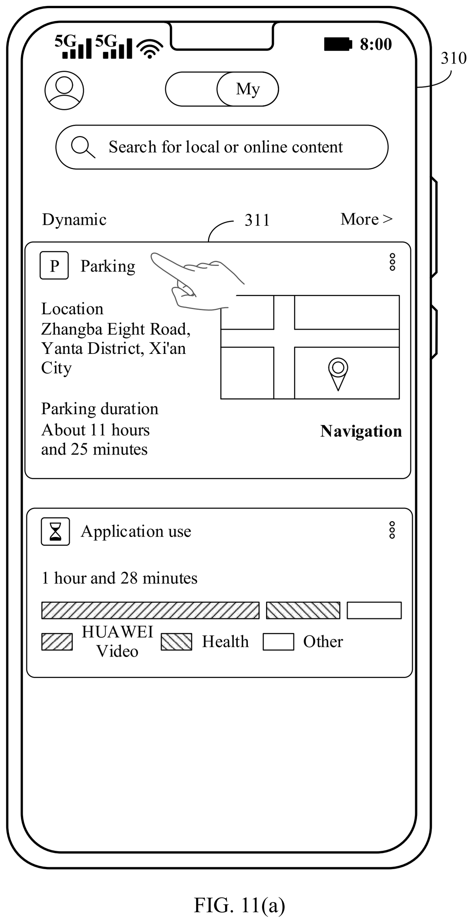

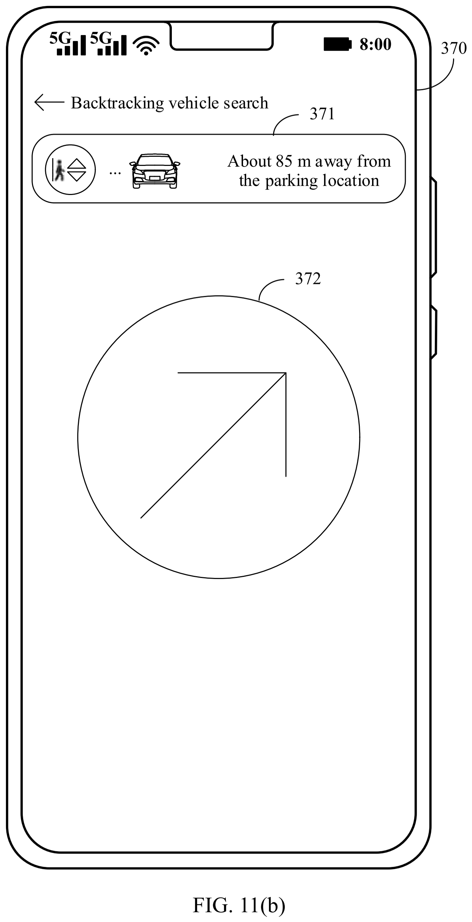

For example, FIG. 11(a) and FIG. 11(b) are a diagram of another group of GUIs according to an embodiment of this application. FIG. 11(a) and FIG. 11(b) show a process in which an electronic device provides vehicle location guidance for a user.

For FIG. 11(a), refer to related descriptions of FIG. 8(a).

If the electronic device 300 determines that the current location of the user is near the target elevator room, after the electronic device 300 detects an operation of tapping the parking widget 311 by the user, the electronic device 300 may display a GUI shown in FIG. 11(b).

For FIG. 11(b), refer to related descriptions of FIG. 10(c). For brevity, details are not described herein again.

In this way, when the current location of the user is near the target elevator room, the user may tap a parking widget, so that the electronic device directly displays the display interface indicating the direction of the vehicle location, thereby improving user operation efficiency.

In some cases, when the user is near the target elevator room, for example, when the user gets off the elevator and prepares to search for a vehicle, if the electronic device determines that the current location of the user is near the target elevator room (an end point of the track), the electronic device may actively display a reminder message. For example, if the electronic device is in a screen-locked state, the reminder message may display on a screen-locked interface; or if the electronic device displays a desktop or a display interface of another application, the reminder message may display to notify the user.

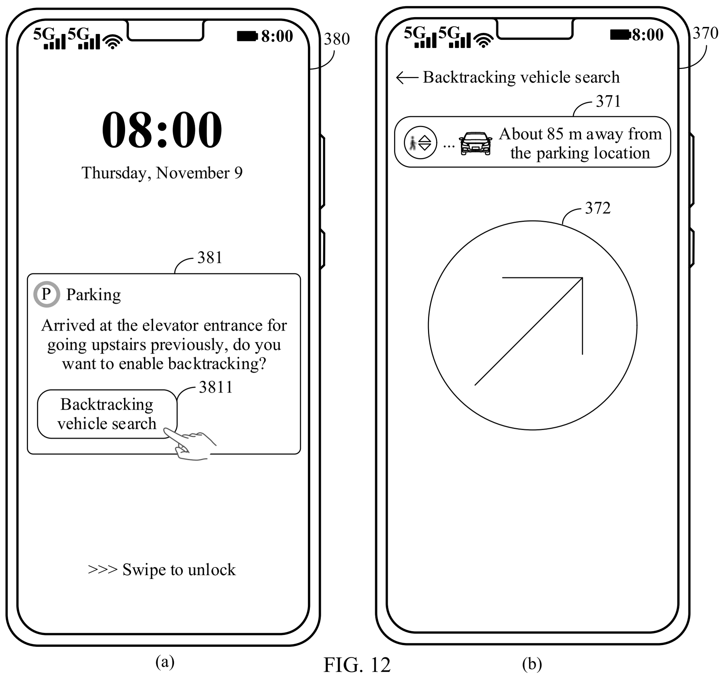

For example, FIG. 12 is a diagram of another group of GUIs according to an embodiment of this application. (a) in FIG. 12 and (b) in FIG. 12 show a process in which the electronic device displays the reminder message.

As shown in (a) in FIG. 12, if the electronic device 300 determines that the current location of the user is near the target elevator room (the end point of the track), the display widget 381 of the reminder message may display in the display interface 380 of the lock screen of the electronic device.

The display widget 381 may include text content "Arrived at the elevator entrance that is used to go upstairs previously, do you want to enable backtracking?" and a "Backtracking vehicle search" function button 3811.

After the electronic device detects an operation of tapping the "Backtracking vehicle search" function button 3811 by the user, the electronic device may display a GUI shown in (b) in FIG. 12.

For (b) in FIG. 12, refer to related descriptions of FIG. 10(c). For brevity, details are not described herein again.

Based on this embodiment of this application, if the electronic device determines that the current location of the user is near the target elevator room (the end point of the track), the electronic device may actively display the reminder message, to notify the user that track backtracking can be enabled to quickly search for the vehicle.

It may be understood that, in some cases, when the electronic device detects that the user passes the target elevator room, the electronic device may also display the reminder message. This is not limited in embodiments of this application.

It may be understood that the technical solutions in the embodiments shown in the foregoing FIG. 6(a) to FIG. 12 may be combined with each other or partially combined to form a new technical solution. It should not be considered that the technical solution goes beyond the protection scope of this application.

In some cases, because there is magnetic field interference, when the user views the walking track of the user at different locations, the electronic device may present different display manners to the user based on whether there is magnetic field interference at a current location.

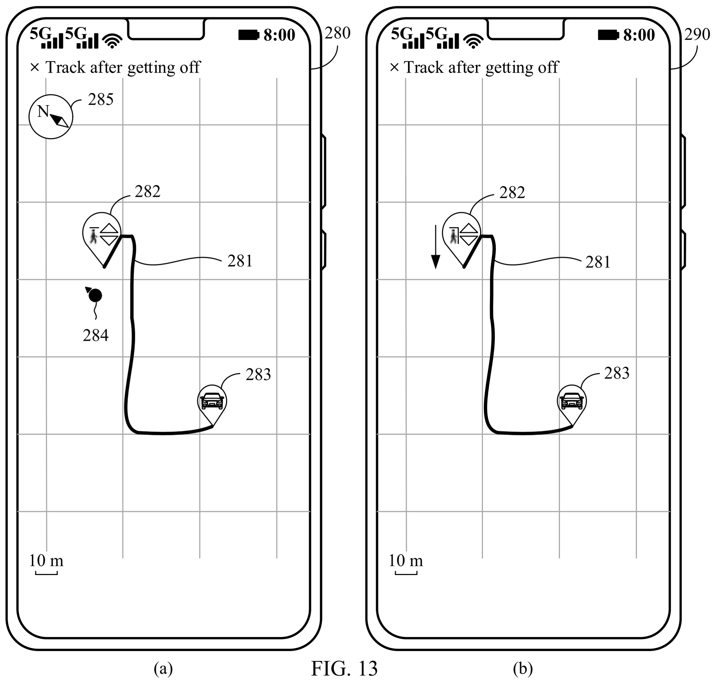

FIG. 13 is a diagram of another group of GUIs according to an embodiment of this application.

When a user views a walking track, if an electronic device determines that there is no magnetic field interference or there is small interference at a current location, the electronic device may directly display a track based on the earth coordinate system.

The electronic device may determine, by obtaining data of a magnetometer, whether there is magnetic field interference. For example, when a value that is of the magnetometer and that is obtained by the electronic device is less than or equal to a threshold, it may be determined that there is no magnetic field interference; or when a value that is of the magnetometer and that is obtained by the electronic device is greater than a threshold, it may be determined that there is magnetic field interference.

For example, as shown in (a) in FIG. 13, the GUI may be a display interface 280 of the electronic device. The display interface 280 may include a walking track 281 of the user, an icon 282 (an end point of the track) of a location of an elevator room, an icon 283 (a start point of the track) of a location of a vehicle, an icon 284 of a current location of the user, and a direction indication icon 285. In this way, the user can determine the location of the user and the location of the vehicle.

If the electronic device determines that there is magnetic field interference or there is strong interference at the current location, the electronic device may display the track in the display interface according to a preset presentation rule. For example, the electronic device may rotate a direction of the entire track based on a direction of a segment of track (for example, a segment of track entering the target elevator room) determined in a track recording phase, so that the direction of the segment of track points to the bottom (or the bottom) of the display interface.

For example, as shown in (b) in FIG. 13, the GUI may be a display interface 290 of the electronic device. The display interface 290 may include a walking track 291 of the user, an icon 292 (an end point of the track) of a location of an elevator room, an icon 293 (a start point of the track) of a location of the vehicle, and a direction indication icon 294.

The direction indication icon 294 may point to the bottom (or below) of the display interface 290. In some other examples, the direction indication icon 294 may alternatively point to another direction, for example, the top (or above) of the display interface 290. This is not limited in embodiments of this application.

Based on this embodiment of this application, the electronic device may present different display manners to the user based on whether there is magnetic field interference at the current location, to provide direction guidance on the location of the vehicle for the user in a plurality of cases, and to improve user experience.

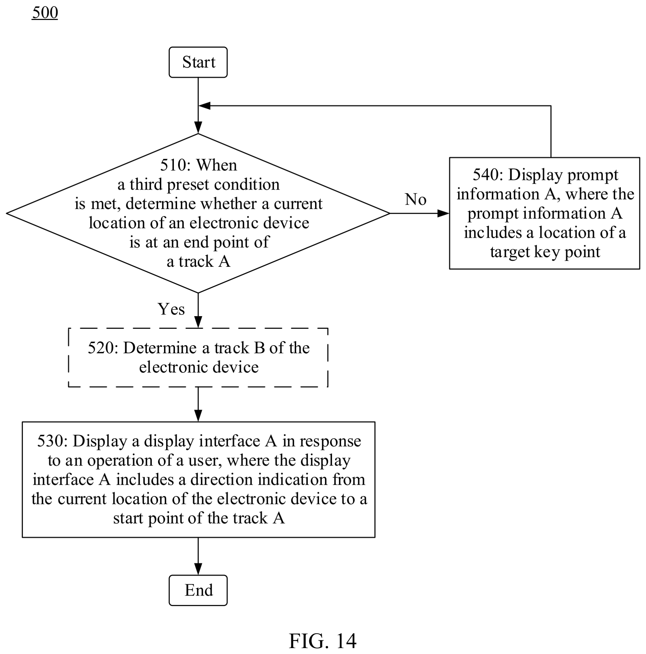

The following describes a technical solution of a track backtracking phase in this application with reference to FIG. 14. In the track backtracking phase, a user may quickly find a location of a vehicle based on guidance of an electronic device.

For example, FIG. 14 is a schematic flowchart of track backtracking according to an embodiment of this application. As shown in FIG. 14, the method 500 may include step 510 to step 540.

510: The electronic device determines whether a current location is at an end point of a track A.

For example, the electronic device may determine, based on the obtained data information, whether the current location is at the end point of the track A.

It may be understood that, for a manner in which the electronic device determines whether the current location is at the end point of the track A, refer to the foregoing related descriptions.

520: If the current location of the electronic device is at the end point of the track A, determine a track B of the electronic device.

If the current location of the electronic device is at the end point of the track A, the electronic device may determine the track B of the electronic device. It may be understood that a manner in which the electronic device determines the track B may be the same as a manner in which the electronic device determines the track A. For example, the end point of the track A is used as a start point of the track B, and a track between the end point and the start point is recorded based on various obtained data information. In this way, the electronic device may determine a current location of the electronic device and a relative location of the track A.

It should be understood that the electronic device may map the determined track A and track B to a same coordinate system. Because data information obtained by the electronic device at a same location is almost the same, and data errors are also almost the same, the track A and the track B are mapped to the same coordinate system, and a location of the user can be accurately reflected.

It should be understood that step 520 may be an optional step. In another example, step 520 may not be performed. This is not limited in embodiments of this application.

When step 520 is not performed, the electronic device may directly display a direction indication from the current location to the start point of the track A, to provide general manner guidance for the user. This helps the user search for the vehicle in a correct direction, and increases a possibility that the user successfully finds the vehicle.

530: Display a display interface A in response to an operation A of the user, where the display interface A includes a direction indication from the current location of the electronic device to the start point of the track A.

For example, the operation A may be an operation of tapping track backtracking by the user. As shown in FIG. 7(c), the display interface A may be a display interface 250, and the direction indication may be an icon 252. The icon 252 may indicate a direction in which the user needs to move forward, to guide the user to search for a vehicle.

In some examples, the display interface A may further include a distance indication between the current location of the electronic device and a parking location. This helps the user determine how far away the vehicle is.

In some examples, as the electronic device or the user moves, the direction indication and the distance indication in the display interface A may be updated in real time.

540: If the current location of the electronic device is not at the end point of the track A, display prompt information A, where the prompt information A includes a location of a target key point.

For example, as shown in FIG. 6(c), a display interface corresponding to the prompt information A may be a display interface 230. When the electronic device determines that the current location is not at the end point of the track A, the electronic device may display the prompt information A based on an operation of the user, to provide guidance on the location of the target key point for the user. This helps the user reach the target key point based on the guidance, and further reach the end point of the track A.

For example, as shown in (a) in FIG. 3, the target key point may be a location of leaving an elevator room on the first floor. As shown in (b) in FIG. 3, the target key point may be a location of leaving an escalator on the first floor. As shown in FIG. 4, the target key point may be the same as the end point of the track A, and is a location of entering the shopping mall at the basement level 1.

In this way, when the location of the electronic device is not at the end point of the track A, the electronic device may display the prompt information A, to indicate the location of the target key point to the user. This helps guide the user to reach the end point of the track A.

In some other examples, when the user passes through the end point of the track A with the electronic device, the user may not immediately turn on the electronic device to view the original track A, and may turn on the electronic device to view a track after walking a distance.

In this case, in this application, when the electronic device detects that the electronic device passes through the end point of the track A, the electronic device may determine the track B of the electronic device, or may start to record the track B of the electronic device, and use the end point of the track A as the start point of the track B. It may be understood that the electronic device may map the track A and the track B to a same coordinate system, so that when the user subsequently turns on the electronic device at any moment T, the electronic device may determine a location T and a moving direction of the electronic device at the moment T, and the electronic device may display the location T and a relative location of the track A.

In an example, the location T may be located on the track A, so that the user can determine a distance from the location T to the parking location, whether the user walks in a wrong direction, and the like.

For example, in a moving process of the electronic device, if a moving direction of the electronic device is approximately correct, data obtained by the electronic device at the same location T of the track A and the track B may be the same. Therefore, the electronic device may compare the obtained data information with data information in the track A, if the difference between the obtained data information and data information in the track A or the similarity between the obtained data information and data information in the track A is less than a threshold, the electronic device may display the location T in the track A.

In another example, the electronic device may alternatively display both the track A and the track B on a display interface, so that the user can determine whether the track of currently searching for the vehicle is correct.

It should be understood that, for a manner in which the electronic device starts to record the track B of the electronic device, refer to the foregoing related descriptions.

In the foregoing embodiment, the electronic device cannot obtain longitude and latitude information of the parking location. Therefore, a walking track (relative displacement) of the user getting off the vehicle needs to be used to help the user perform backtracking to search for the vehicle. In another case, if track recording of the vehicle is started when the vehicle enters an underground garage (the vehicle cannot be located through a satellite), the longitude and latitude information of a parking location may be obtained based on satellite positioning information and track information of the vehicle before the vehicle enters the underground garage.

It should be understood that the vehicle or a sensor (for example, an accelerometer, a gyro, or a magnetometer) in the vehicle, and/or wheel speed information, steering information, and the like that are uploaded by the vehicle, can be used to obtain displacement and a displacement direction of the vehicle at each moment, to determine the location of the vehicle.

In this case, after the user gets off the vehicle, the electronic device may not start walking track recording, but only needs to record an atmospheric pressure value after the vehicle stops. The atmospheric pressure value may correspond to a target floor of the parking location. In addition, the electronic device may determine the floor change event (including walking out of the parking lot), and corresponding location information is obtained based on the floor change event, to obtain location information (for example, longitude and latitude) of the target key point (for example, the elevator room). When the user subsequently searches for the vehicle, the electronic device may start to record a track C of the electronic device after the electronic device determines that the user is located on the target floor. The electronic device may further display, in the display interface in response to an operation of the user, a direction and a distance from a current location of the electronic device to the parking location. The electronic device may further display the track C, a direction of a current location of the user, and a location of the vehicle.

It may be understood that a manner in which the electronic device records the track C may be the same as the manner in which the electronic device records the track B. Details are not described herein again.

In this way, the parking location and a relative location the target key point can be obtained without using the walking track of the user getting off the vehicle, to implement the foregoing vehicle search procedure, and help the user find the parking location.

Specifically, for example, the target key point is the elevator room. The electronic device has determined location information A of the vehicle, location information B of the elevator room, and information about the target floor on which the vehicle is located (based on the location information provided by a barometer or a shopping mall).

In an implementation, when the user searches for the vehicle, the user continues to take the previous elevator. In this case, a process in which the user performs backtracking to search for the vehicle may be performed by the electronic device, and includes the following steps.

Step 1: When the electronic device can obtain an accurate positioning signal, obtain location information C of the electronic device.

For example, when the user is in the shopping mall, the accurate positioning signal can be obtained. In this case, the electronic device may obtain longitude and latitude coordinates of the electronic device in real time or intermittently.

Step 2: Determine whether a difference between the location information C and the location information B is less than a threshold.

For example, the location information C and the location information B may be longitude and latitude coordinates, and the electronic device may determine whether a difference between a longitude and latitude of the location information C and a longitude and latitude of the location information B is less than a threshold.

Step 3: If a difference between the location information C and the location information B is less than the threshold, determine whether the electronic device is located on the target floor.

If the difference between the longitude and latitude of the location information C and the longitude and latitude of the location information B is less than the threshold, it may be determined that the electronic device is currently located in the elevator room previously taken. In this case, the electronic device may further determine whether the electronic device is located on the target floor.

For example, the electronic device may compare a currently obtained value of the barometer with a value of the barometer that is obtained after the user gets off the vehicle, to determine whether the electronic device is located on the target floor; or the electronic device may further determine, based on obtained floor information, whether the electronic device is located on the target floor; or the electronic device may further compare currently obtained altitude information with altitude information obtained after the user gets off the vehicle, to determine whether the electronic device is located on the target floor.

Step 4: If the electronic device is located on the target floor, record the track C of the electronic device.

It should be understood that if the electronic device is located on the target floor, the current location of the electronic device and the vehicle are located on a same floor, and the electronic device may start to record the track C.

For a recording manner of the track C, refer to the foregoing related descriptions of recording the track B by the electronic device. For example, the electronic device records the track C based on data of various sensors.

Step 5: Display prompt information C, where the prompt information C indicates a direction from the current location of the electronic device to the location information A of the vehicle.

The electronic device may display the prompt information C in the display interface in response to an operation of the user.

The prompt information C may further indicate a distance from the current location to the location information A of the vehicle.

Because both the parking location and the location of the elevator room are longitude and latitude coordinates in the earth coordinate system, in another implementation, when the user does not take the previous elevator when the user performs backtracking to search for the vehicle, a process in which the user performs backtracking to search for the vehicle may be performed by the electronic device, and includes the following steps.

Step 1: When the electronic device can obtain an accurate positioning signal, obtain location information C of the electronic device.

For example, when there is the accurate positioning signal, the electronic device may continuously obtain (or obtain at intervals in a specific manner) the location information of the electronic device. The location information may be longitude and latitude coordinates of the electronic device.

Step 2: Determine whether the electronic device is located on the target floor.

For example, when the electronic device detects the floor change event, the electronic device may determine, based on data of the barometer or obtained floor information, whether the electronic device is located on the target floor.

Step 3: When it is determined that the electronic device is located on the target floor, record the track C of the electronic device.

For example, the electronic device may use the location information C obtained for the last time as a start point, and determine longitude and latitude coordinates of the electronic device at a current moment based on obtained data of various sensors, to record the track C of the electronic device.

Step 4: Display prompt information C, where the prompt information C indicates a direction from the current location of the electronic device to the location information A of the vehicle.

The electronic device may display the prompt information C in the display interface in response to an operation of the user.

The prompt information C may further indicate a distance from the current location to the location information A of the vehicle.

In this way, the user does not need to start to search for a vehicle from an elevator that the user takes previously. After the user arrives at the target floor from another elevator, the electronic device may also provide vehicle search guidance for the user, to help the user quickly find the vehicle.

In some other examples, the electronic device may alternatively determine the location of the vehicle based on the direction of the track 1 or directions of some tracks in the track 1 that are determined by the electronic device in the foregoing embodiment, and the location information of the target key point.

For example, the track 1 is mapped to the coordinate system based on the longitude and latitude information of the target key point and the direction of the track 1 or a direction in which the user enters the elevator in the track 1, so that longitude and latitude coordinates of the start point of the track 1 may be determined, that is, the location of the vehicle.

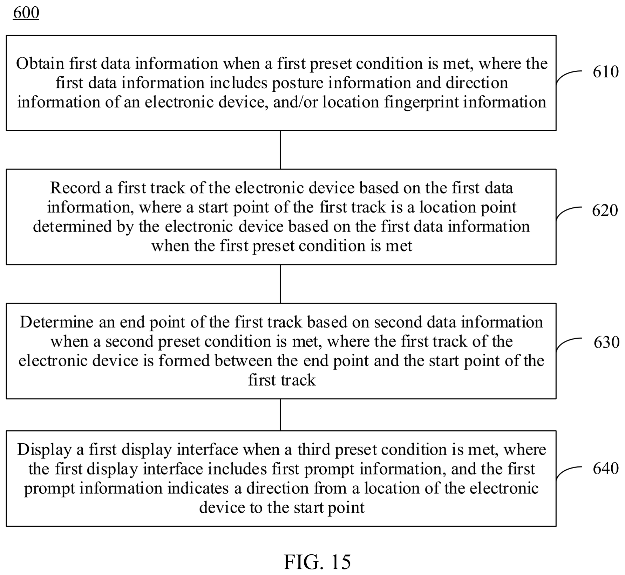

FIG. 15 is a schematic flowchart of an indoor navigation method according to an embodiment of this application. As shown in FIG. 15, the method 600 may be applied to an electronic device, and the method 600 may include step 610 to step 640.

610: The electronic device obtains first data information when a first preset condition is met, where the first data information includes posture information and direction information of the electronic device, and/or location fingerprint information.

For example, the electronic device is communicatively connected to an intelligent driving device, and the first preset condition may include but is not limited to at least one of the following content:
a gear of the intelligent driving device is in a parking gear;
the communication connection between the electronic device and the intelligent driving device is disconnected;
the intelligent driving device is in a locked state;
an operation of starting track recording is detected; or
a distance between the electronic device and the intelligent driving device is greater than a preset distance, where the preset distance is calculated by the electronic device in a wireless communication manner (for example, Bluetooth or UWB).

It should be understood that the electronic device is communicatively connected to the intelligent driving device (for example, a vehicle), so that the electronic device can obtain various statuses of the intelligent driving device.

The electronic device may obtain the first data information when the first preset condition is met, where the first data information includes the posture information and the direction information of the electronic device, and/or the location fingerprint information.

For example, the electronic device obtains the posture information via an accelerometer and a gyro, and obtains the direction information via the gyro and a magnetometer. The location fingerprint information may include strength of a wireless signal obtained by the electronic device, for example, a strength of a Wi-Fi signal or a strength of a Bluetooth signal, and may further include a strength of a geomagnetic signal.

620: The electronic device records a first track of the electronic device based on the first data information, where a start point of the first track is a location point determined by the electronic device based on the first data information when the first preset condition is met.

It should be understood that, for a specific implementation in which the electronic device records the first track of the electronic device based on the first data information, refer to the foregoing related descriptions.

The start point of the first track may be understood as a location of the vehicle. The first track is a walking track after the user gets off the vehicle.

630: The electronic device determines an end point of the first track based on second data information when a second preset condition is met, where the first track of the electronic device is formed between the end point and the start point of the first track.

For example, the second preset condition is at least one of the following conditions:
a change value of data that is of a magnetometer and that is obtained by the electronic device is greater than a second threshold;
an absolute change value of data that is of a barometer and that is obtained by the electronic device is greater than a third threshold, or a change value of data that is of a barometer and that is obtained by the electronic device within preset time is greater than a fourth threshold;
a change of data that is of an inertial sensor and that is obtained by the electronic device conforms to a first rule, and the inertial sensor includes at least one of an accelerometer, a gyro, or a magnetometer;
a signal strength of a communication signal of the electronic device conforms to a second rule, and the communication signal includes at least one of a Wi-Fi signal, a Bluetooth signal, a cellular signal, or a positioning signal;
the electronic device is able to obtain accurate positioning information; or
a floor on which the electronic device is located changes.

It should be understood that the electronic device may determine the end point of the first track when the second preset condition is met.

For example, as shown in (a) in FIG. 3, the end point may be a location of a target elevator room. As shown in (b) in FIG. 3, the end point may alternatively be a location of going up the escalator. As shown in FIG. 4, the end point may alternatively be a location of an entrance of a shopping mall.

For example, the first rule may be a data change rule determined by the electronic device via an inertial sensor for an event that the user goes up and down an elevator, a stair, an escalator, or the like. The rule may be a rule preset in the electronic device.

It should be understood that the electronic device may alternatively determine the foregoing event, for example, going up and down an elevator, a stair, an escalator, or the like via only one of the inertial sensors. For example, it is determined, according to a change rule of the accelerometer, whether the user goes up or goes down an elevator.

For example, the second rule may be that the signal strength first decreases and then increases after a period of time. Alternatively, the second rule may be a rule preset in the electronic device.

A type of data included in the second data information may be the same as a type included in the first data information, for example, data of various sensors. In some examples, the second data information is the same as the first data information.

It should be understood that specific values of the second threshold, the third threshold, and the fourth threshold are not limited in embodiments of this application. When the absolute value of the change of the obtained data of the barometer is greater than the third threshold, or the change value of the data that is of the barometer and that is obtained by the electronic device within preset time is greater than the fourth threshold, the electronic device may determine that the floor on which the electronic device is located changes.

Step 630 may be further understood as follows: When the second preset condition is met, the electronic device stops recording the walking track of the user, and a point at which the electronic device stops recording the walking track is the end point.

640: The electronic device displays a first display interface when a third preset condition is met, where the first display interface includes first prompt information, and the first prompt information indicates a direction from a location of the electronic device to the start point.

For example, the third preset condition includes at least one of the following conditions.

Condition 1: The location of the electronic device is at the end point of the first track.

Condition 2: The second track of the electronic device includes the end point of the first track, where the second track is determined by the electronic device based on third data information, the third data information includes posture information and direction information of the electronic device, and/or location fingerprint information, and the second track and the first track are located in a same coordinate system.

Condition 3: When a floor change is detected, a difference between a location obtained by the electronic device for the last time and a target key point is less than a threshold.

In the condition 1, when the user searches for the vehicle, after the current location of the electronic device is at the end point of the first track, the electronic device also needs to start to record the track of the electronic device, and the electronic device may display the first display interface, to provide direction guidance on the location of the vehicle for the user.

In the condition 2, when the user searches for the vehicle, the user may not view a mobile phone after the user passes through the end point of the first track, and views the mobile phone after the user walks a distance. In this case, when the user passes through the end point of the first track, the electronic device starts to record the second track, and may display the first display interface when the user views the mobile phone, to provide direction guidance on the location of the vehicle for the user.

In the condition 3, when the floor change is detected, and the difference between the location obtained by the electronic device for the last time and the target key point is less than the threshold, it may be understood that, when the user searches for the vehicle, and the user gets off the elevator from the target key point and reaches a corresponding floor, the electronic device may display the first display interface, to provide direction guidance on the location of the vehicle for the user.

Based on this embodiment of this application, after the electronic device detects that the user gets off the vehicle, the electronic device may obtain data of various sensors, and record a walking track of the user, that is, the first track; the electronic device may determine the end point (for example, an elevator room) of the first track when the second preset condition is met; and when the user subsequently searches for the vehicle, if the electronic device determines that a location of the user is at the end point of the first track, or the user passes through the end point of the first track, the electronic device may start to perform track backtracking (record the track again), and may display, in the first display interface, a direction from the current location of the user to the start point of the first track.

In this technical solution, various data information may be obtained via an electronic device carried by the user, to record a track of the user from a getting-off point to an identified location (for example, an elevator room). In this way, when the user subsequently arrives at the identified location again or passes through the identified location, the electronic device may provide corresponding direction guidance for the user based on a previously obtained walking track, so that the user can conveniently find the location of the vehicle.

In some embodiments, that the electronic device displays the first display interface when the third preset condition is met includes:
when the third preset condition is met, the electronic device displays the first display interface in response to a first operation of a user.

When the third preset condition is met, the electronic device may further display the first display interface based on the operation of the user.

For example, as shown in FIG. 7(b) and FIG. 7(c), the first operation may be an operation that the user taps a "Backtracking vehicle search" function button 2411, and the first display interface may be a display interface 250.

In some embodiments, the method 600 further includes:
displaying a second display interface in response to a second operation of the user, where the second display interface includes the first track, indication information of a location and a direction of the electronic device, and/or the second track.

For example, as shown in FIG. 7(e), the second operation may be an operation of tapping a widget 251 by the user, and the second display interface may be a display interface 260. The first track is a track 262, and the indication information of the location and the direction of the electronic device is 2623.

Optionally, the second display interface may further include an indication of the location of the vehicle and an indication of a location of the end point of the first track.

Optionally, the second display interface may not include the first track. In this case, the second display interface includes the indication of the location and the direction of the electronic device and the indication of the location of the vehicle.

Based on this embodiment of this application, the electronic device may display, in response to the second operation of the user, the second display interface including the first track, and the indication information of the location and the direction of the electronic device, so that real-time guidance on the location of the vehicle and the current location of the user can be provided for the user. In addition, the second display interface may further include the second track, so that the user can determine whether a walking track of the user deviates from an originally recorded track in the vehicle search phase of the user.

In some embodiments, recording the first track of the electronic device based on the first data information includes:
determining, based on the first data information, relative displacement, a direction, and/or location fingerprint information of a target moment relative to a moment at which the start point is located or a previous moment of the target moment; and
recording the first track based on the relative displacement, the direction, and/or the location fingerprint information.

It should be understood that the target moment may be a moment at which a sensor of the electronic device performs sampling.

Based on this embodiment of this application, the electronic device may determine, based on various types of data, the relative displacement, the direction, and/or the location fingerprint information of the target moment relative to the moment at which the start point is located or the previous moment of the target moment, to record the walking track of the user.

In some embodiments, the method 600 further includes:
in a moving process of the electronic device, updating the direction in first prompt information in real time based on the first track.

During track backtracking, the electronic device records the track again, so that a location and a direction of each moment can be determined, to update the direction in the first prompt information in real time. It should be understood that a manner in which the electronic device records the track again is the same as the manner in which the electronic device records the first track.

Based on this embodiment of this application, in the process in which the user moves with the electronic device, the electronic device may further update the direction in the first prompt information in real time. In this way, real-time direction guidance can be provided for the user.

In some embodiments, updating the direction in the first prompt information in real time based on the first track includes:
determining displacement, a direction, and/or location fingerprint information of a location of the electronic device relative to the first track based on fourth data information; and
updating the direction in the first prompt information in real time based on the displacement, the direction, and/or the location fingerprint information of the location of the electronic device relative to the first track and the first track.

In the process in which the user moves with the electronic device, the electronic device may determine, based on the obtained fourth data information, information such as the displacement and the direction in which the electronic device is currently located, to update the direction in the first prompt information in real time.

In some embodiments, before displaying the first display interface, the method 600 further includes:
if the location of the electronic device is not at the end point of the first track, displaying a third display interface in response to a third operation of the user, where the third display interface includes a location of the end point of the first track.

For example, the end point of the first track may be a junction between an underground garage and a shopping mall, or the end point of the first track may be a junction between an underground garage and the outside.

Based on this embodiment of this application, if the user is not at the end point of the first track, the user may further view the location of the end point of the first track based on the third operation, to provide guidance on the location of the end point of the track for the user.

In some embodiments, determining the end point of the first track based on the second data information includes:
determining location information of the target key point; and
determining the end point of the first track based on the location information of the target key point and the second data information; and
the method 600 further includes:
   if the location of the electronic device is not at the end point of the first track, displaying a third display interface in response to a third operation of the user, where the third display interface includes the location information of the target key point.

For example, as shown in FIG. 6(b) and FIG. 6(c), the third operation may be an operation of tapping a "Go to the elevator" function button 2211 by the user, the third display interface may be a display interface 230, and the location information of the target key point may be an indication icon 232.

For example, if the user takes an elevator from an underground garage, the target key point may be a location at which the user leaves the elevator. Because the user leaves the elevator and enters the shopping mall, the electronic device may obtain location information of the location, for example, longitude and latitude coordinates. The end point of the first track may be a location near the elevator that the user enters.

Based on this embodiment of this application, the electronic device may display a location of the target key point based on the operation of the user, to provide guidance on the location of the target key point for the user. This helps the user find the target key point based on the guidance, and facilitates subsequent accurate vehicle search.

In some embodiments, the method 600 further includes:
displaying a fourth display interface in response to a fourth operation of the user, where fourth display interface includes the first track of electronic device.

For example, as shown in FIG. 8(b) and FIG. 8(c), the fourth operation may be an operation of tapping a "View a track" function button 2221 by the user, and the fourth display interface may be a display interface 330.

Based on this embodiment of this application, the electronic device may display the first track of the electronic device based on the operation of the user, so that the user can view a track from a getting-off point to a key identification point.

In some embodiments, the fourth display interface further includes a current location and a current direction of the electronic device.

Based on this embodiment of this application, the fourth display interface may further include the current location and the current direction of the electronic device, so that the user can determine a relative relationship between the location of the user and the first track.

In some embodiments, an actual direction of a segment of track that is in the first track and that has a determined direction is a first direction, and after the first track in the third display interface is rotated, a direction of the segment of track that has the determined direction is displayed as a second direction, where the second direction is perpendicular to an edge on which a status bar of the electronic device is located.

For example, if the first direction is a direction of entering an elevator, the second direction is downward. Alternatively, if the first direction is a direction of leaving an elevator, the second direction is upward.

In some embodiments, the method 600 further includes:
obtaining fifth data information of the electronic device; and
if a similarity between the fifth data information and the second data information is greater than a first threshold, determining that the location of the electronic device is at the end point of the first track; or
if a similarity between the fifth data information and the second data information is less than or equal to a first threshold, determining that the location of the electronic device is not at the end point of the first track.

For example, the fifth data information and the second data information are location fingerprint information.

Based on this embodiment of this application, the electronic device may determine, based on a relationship between the obtained fifth data information and the obtained second data information, whether the current location of the electronic device is at the end point of the first track. This helps the electronic device determine whether to start to record the track of the user again, to provide direction and distance guidance for the user.

In some embodiments, the method 600 further includes:
in response to a fifth operation of the user, determining that the location of the electronic device is at the end point of the first track.

For example, as shown in FIG. 8(c), the fifth operation may be an operation of tapping a function option box 3331 by the user.

In some embodiments, the first prompt information further includes a distance from the location to the start point.

Based on this embodiment of this application, the first prompt information may further include the distance from the current location of the electronic device to the start point of the first track. This helps the user learn of a distance from the current location to a parking location.

In some embodiments, the end point of the first track is the elevator room.

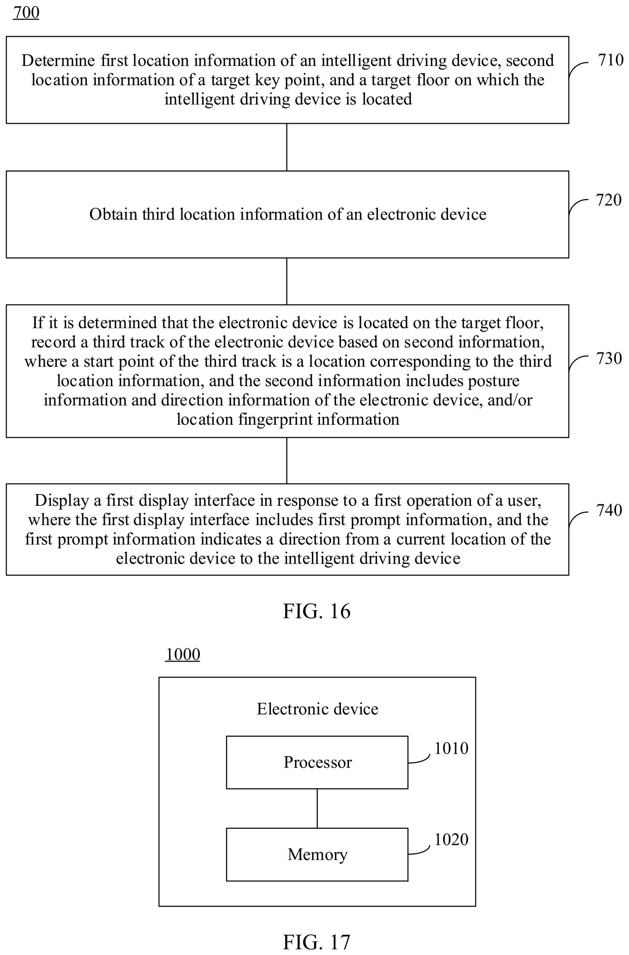

In some cases, the electronic device may obtain longitude and latitude information of the parking location. This technical solution is described below with reference to FIG. 16.

FIG. 16 is a schematic flowchart of another indoor navigation method according to an embodiment of this application. As shown in FIG. 16, the method 700 may be applied to an electronic device, and the method 700 may include step 710 to step 740.

710: An electronic device determines first location information of an intelligent driving device, second location information of a target key point, and a target floor on which the intelligent driving device is located.

For example, the electronic device may obtain displacement and a displacement direction of the vehicle at each moment by using the vehicle or a sensor (for example, an accelerometer, a gyro, or a magnetometer) of the electronic device, and/or based on wheel speed information, steering information, and the like that are uploaded by the vehicle. In this way, a location (for example, longitude and latitude coordinates) of the vehicle after the vehicle enters an underground garage can be determined.

For example, the second location information of the target key point may be longitude and latitude coordinates obtained by the electronic device, for example, longitude and latitude coordinates of a user leaving an elevator.

For example, the target floor on which the intelligent driving device is located may be obtained by the electronic device by using a barometer, or may be determined by the electronic device based on floor information.

720: The electronic device obtains third location information of the electronic device.

When the user subsequently searches for a vehicle, the electronic device may continuously obtain, when the electronic device can obtain accurate location information, the third location information of the electronic device, for example, longitude and latitude coordinates.

730: If it is determined that the electronic device is located on the target floor, the electronic device records a third track of the electronic device based on second information, where a start point of the third track is a location corresponding to the third location information, and the second information includes posture information and direction information of the electronic device, and/or location fingerprint information.

If the electronic device determines that the electronic device is located on the target floor, it means that the user has currently arrived at a floor on which the user previously parked. In this case, the user may have a requirement for searching for the vehicle, and the electronic device may start to record the third track of the electronic device, where the start point of the track is the location corresponding to the third location information.

740: Display a first display interface in response to a first operation of the user, where the first display interface includes first prompt information, and the first prompt information indicates a direction from a current location of the electronic device to the intelligent driving device.

In another example, the first prompt information may further indicate a distance from the current location of the electronic device to the intelligent driving device.

Based on this embodiment of this application, the electronic device may first determine the first location information of the intelligent driving device (for example, a vehicle), the second location information of the target key point, and the target floor on which the parked vehicle is located. When the user subsequently searches for a vehicle, the electronic device may continuously obtain the third location information of the electronic device when the electronic device can obtain accurate location information. If it is further determined that the electronic device is located on the target floor, the electronic device may record the third track of the electronic device based on the second information, and the last obtained third location information of the electronic device is used as the start point of the third track. In this way, when the user expects the electronic device to provide guidance, the user may enable, through the first operation, the electronic device to display the first display interface, to provide direction guidance on a direction from the current location to a location of the vehicle for the user.

In this technical solution, after the user gets off the vehicle, the electronic device has determined a longitude and latitude of the vehicle, the target floor on which the vehicle is located, and a longitude and latitude of the target key point (for example, an elevator room). During subsequent vehicle search, the electronic device may continuously obtain the third location information of the electronic device when the electronic device can obtain accurate location information. After the user arrives at the target floor, the electronic device may start to record a track, and the third location information is used as a start point. Because the recorded track also has a direction and a distance, and longitude and latitude coordinates of the vehicle are known, the electronic device may provide direction and distance guidance for the user.

In some embodiments, determining that the electronic device is located on the target floor includes:
if a difference between obtained first data and second data of a barometer is less than a fifth threshold, determining that the electronic device is located on the target floor, where the first data is a value that is of the barometer and that is currently obtained by the electronic device, and the second data is a value that is of the barometer and that is obtained on the target floor and that is recorded by the electronic device; or
determining, based on obtained floor information, that the electronic device is located on the target floor.

It should be understood that a specific value of the fifth threshold is not limited in embodiments of this application.

Based on this embodiment of this application, the electronic device may determine, in a plurality of manners, whether the electronic device is located on the target floor.

In some embodiments, before determining that the electronic device is located on the target floor, the method 700 further includes:
determining that a difference between the third location information and the second location information is less than or equal to a sixth threshold; or
determining that the third location information is location information obtained by the electronic device for the last time.

It should be understood that a specific value of the sixth threshold is not limited in embodiments of this application.

Based on this embodiment of this application, if the difference between the third location information and the second location information is less than or equal to the sixth threshold, it may be determined that the user comes out of the previous elevator. The third location information is the location information obtained by the electronic device for the last time, and may be location information obtained when the user comes out of another location. In both cases, the technical solutions of this application are applicable.

In some embodiments, the method 700 further includes:
displaying a second display interface in response to a second operation of the user, where the second display interface includes the first location information, the second location information, indication information of a current location and a current direction of the electronic device, and/or the third track.

Based on this embodiment of this application, the user may further view a specific location of the vehicle, the current location and direction of the electronic device, and/or the third track of the user after the user is located on the target floor through a convenient operation. This helps the user determine the location of the user and the location of the vehicle.

In some embodiments, recording the third track of the electronic device based on the second information includes:
determining a location, a direction, and/or location fingerprint information at a current moment based on the second information and the third location information; and
recording the third track based on the location, the direction, and/or the location fingerprint information at the current moment.

Based on this embodiment of this application, the electronic device may determine the location, the direction, and/or the location fingerprint information at the current moment based on various data and the third location information of the electronic device, to record a walking track of the user.

In some embodiments, determining the first location information of the intelligent driving device includes:
obtaining first data information when a first preset condition is met, where the first data information includes posture information and direction information of the electronic device, and/or location fingerprint information;
recording a first track of the electronic device based on the first data information, where a start point of the first track is a location point determined by the electronic device based on the first data information when the first preset condition is met;
determining an end point of the first track based on second data information when a second preset condition is met, where the first track of the electronic device is formed between the end point and the start point of the first track; and
determining the first location information of the intelligent driving device based on a direction of the first track or directions of some tracks in the first track and the second location information of the target key point.

It should be understood that, for the first preset condition, the second preset condition, the first track, and the like, refer to the foregoing related descriptions.

Based on this embodiment of this application, after the user gets off the vehicle, the electronic device may record the first track for which the user walks with the electronic device, and determine the first location information of the vehicle based on the direction of the first track or the directions of the some tracks and the second location information of the target key point. For example, the second location information is longitude and latitude coordinates, and the longitude and latitude coordinates may be obtained through reverse deduction based on longitude and latitude coordinates of the target key point and an exact direction in the first track.

FIG. 17 is a block diagram of an example of an electronic device according to an embodiment of this application. As shown in FIG. 17, the electronic device 1000 may include one or more processors 1010 and one or more memories 1020. The one or more memories 1020 store one or more programs. When the one or more programs are executed by the one or more processors 1010, the indoor navigation method according to any one of the foregoing possible implementations is performed.

For example, the electronic device 1000 may be configured to perform the foregoing method 400, method 500, method 600, and method 700. The electronic device 1000 may alternatively be the electronic device 100, the electronic device 200, the electronic device 300, or the like described above.

An embodiment of this application further provides a chip. The chip includes a processor and a communication interface. The communication interface is configured to receive a signal and transmit the signal to the processor. The processor processes the signal, so that the indoor navigation method according to any one of the foregoing possible implementations is performed.

It may be understood that, to implement the foregoing functions, corresponding hardware and/or a corresponding software module for performing each function are/is included. With reference to algorithm steps of examples described in embodiments disclosed in this specification, this application can be implemented in a form of hardware or a combination of hardware and software. Whether a function is performed by the hardware or hardware driven by software depends on particular applications and design constraints of the technical solutions. A person skilled in the art may use different methods to implement the described functions for each specific application with reference to embodiments, but it should not be considered that the implementation goes beyond the scope of this application.

In embodiments, functional modules of the device may be obtained through division based on the foregoing method examples. For example, the functional modules may be obtained through division corresponding to various functions, or two or more functions may be integrated into one processing module. The integrated module may be implemented in a form of hardware. It should be noted that module division in embodiments is an example and is merely logical function division. In practice, there may be another division manner.

This embodiment further provides an apparatus, including modules configured to implement the indoor navigation method in the foregoing embodiments.

An embodiment further provides a readable storage medium. The readable storage medium stores instructions. When the instructions are run on an electronic device, the electronic device is enabled to perform the foregoing related method steps to implement the indoor navigation method in the foregoing embodiments.

An embodiment further provides a program product. When the program product runs on an electronic device, the electronic device performs the foregoing related steps, to implement the indoor navigation method in the foregoing embodiments.

In addition, an embodiment of this application further provides an apparatus. The apparatus may be specifically a chip, a component, or a module. The apparatus may include a processor and a memory that are connected to each other. The memory is configured to store executable instructions. When the apparatus runs, the processor may execute the executable instructions stored in the memory, to enable the chip to perform the indoor navigation method in the foregoing method embodiments.

The apparatus, the device, the readable storage medium, the program product, or the chip provided in embodiments are all configured to perform the corresponding method provided above. Therefore, for beneficial effect that can be achieved by the apparatus, the device, the readable storage medium, the program product, or the chip, refer to the beneficial effect of the corresponding method provided above. Details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate components may or may not be physically separate, and components displayed as units may or may not be physical units, and may be located at one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An indoor navigation method, wherein the method is applied to an electronic device, and the method comprises:
obtaining first data information when a first preset condition is met, wherein the first data information comprises posture information and direction information of the electronic device, and/or location fingerprint information;
recording a first track of the electronic device based on the first data information, wherein a start point of the first track is a location point determined by the electronic device based on the first data information when the first preset condition is met;
determining an end point of the first track based on second data information when a second preset condition is met, wherein the first track of the electronic device is formed between the end point and the start point of the first track; and
displaying a first display interface when a third preset condition is met, wherein the first display interface comprises first prompt information, and the first prompt information indicates a direction from a location of the electronic device to the start point.

2. The method according to claim 1, wherein displaying the first display interface when the third preset condition is met comprises:
when the third preset condition is met, displaying the first display interface in response to a first operation of a user.

3. The method according to claim 1 or 2, wherein the third preset condition comprises at least one of the following conditions:
the location of the electronic device is at the end point of the first track; and
a second track of the electronic device comprises the end point of the first track, the second track is determined by the electronic device based on third data information, and the third data information comprises posture information and direction information of the electronic device, and/or location fingerprint information, wherein the second track and the first track are located in a same coordinate system; or
when a floor change is detected, a difference between a location obtained by the electronic device for the last time and a target key point is less than a threshold.

4. The method according to claim 3, wherein the method further comprises:
displaying a second display interface in response to a second operation of the user, wherein the second display interface comprises the first track, indication information of a location and a direction of the electronic device, and/or the second track.

5. The method according to claim 3, wherein recording the first track of the electronic device based on the first data information comprises:
determining, based on the first data information, relative displacement, a direction, and/or location fingerprint information of a target moment relative to a moment at which the start point is located or a previous moment of the target moment; and
recording the first track based on the relative displacement, the direction, and/or the location fingerprint information.

6. The method according to any one of claims 1 to 5, wherein the method further comprises:
in a moving process of the electronic device, updating the direction in the first prompt information in real time based on the first track.

7. The method according to claim 6, wherein updating the direction in the first prompt information in real time based on the first track comprises:
determining displacement, a direction, and/or location fingerprint information of a location of the electronic device relative to the first track based on fourth data information; and
updating the direction in the first prompt information in real time based on the displacement, the direction, and/or the location fingerprint information of the location relative to the first track and the first track.

8. The method according to any one of claims 1 to 7, wherein before displaying the first display interface, the method further comprises:
if the location of the electronic device is not at the end point of the first track, displaying a third display interface in response to a third operation of the user, wherein the third display interface comprises a location of the end point of the first track.

9. The method according to any one of claims 1 to 7, wherein determining the end point of the first track based on the second data information comprises:
determining location information of the target key point; and
determining the end point of the first track based on the location information of the target key point and the second data information; and
the method further comprises:
if the location of the electronic device is not at the end point of the first track, displaying a third display interface in response to a third operation of the user, wherein the third display interface comprises the location information of the target key point.

10. The method according to any one of claims 1 to 9, wherein the method further comprises:
displaying a fourth display interface in response to a fourth operation of the user, wherein the fourth display interface comprises the first track of the electronic device.

11. The method according to claim 10, wherein the fourth display interface further comprises a location and a direction of the electronic device.

12. The method according to claim 10, wherein an actual direction of a segment of track that is in the first track and that has a determined direction is a first direction, and after the first track in the third display interface is rotated, a direction of the segment of track that has the determined direction is displayed as a second direction, wherein the second direction is perpendicular to an edge on which a status bar of the electronic device is located.

13. The method according to any one of claims 1 to 12, wherein the method further comprises:
obtaining fifth data information of the electronic device; and
if a similarity between the fifth data information and the second data information is greater than a first threshold, determining that the location of the electronic device is at the end point of the first track; or
if a similarity between the fifth data information and the second data information is less than or equal to a first threshold, determining that the location of the electronic device is not at the end point of the first track.

14. The method according to any one of claims 1 to 13, wherein the method further comprises:
in response to a fifth operation of the user, determining that the location of the electronic device is at the end point of the first track.

15. The method according to any one of claims 1 to 14, wherein the first prompt information further comprises a distance from the location to the start point.

16. The method according to any one of claims 1 to 15, wherein the location of the end point of the first track is a location of an elevator room.

17. The method according to any one of claims 1 to 16, wherein the electronic device is communicatively connected to an intelligent driving device, and the first preset condition comprises at least one of the following conditions:
a gear of the intelligent driving device is in a parking gear;
the communication connection between the electronic device and the intelligent driving device is disconnected;
the intelligent driving device is in a locked state;
an operation of starting track recording is detected; or
a distance between the electronic device and the intelligent driving device is greater than a preset distance, wherein the preset distance is calculated by the electronic device in a wireless communication manner.

18. The method according to any one of claims 1 to 17, wherein the second preset condition comprises at least one of the following conditions:
a change value of data that is of a magnetometer and that is obtained by the electronic device is greater than a second threshold;
an absolute change value of data that is of a barometer and that is obtained by the electronic device is greater than a third threshold, or a change value of data that is of a barometer and that is obtained by the electronic device within preset time is greater than a fourth threshold;
a change of data that is of an inertial sensor and that is obtained by the electronic device conforms to a first rule, and the inertial sensor comprises at least one of an accelerometer, a gyro, or a magnetometer;
a signal strength of a communication signal of the electronic device conforms to a second rule, and the communication signal comprises at least one of a Wi-Fi signal, a Bluetooth signal, a cellular signal, or a positioning signal;
the electronic device is able to obtain accurate positioning information; or
a floor on which the electronic device is located changes.

19. An indoor navigation method, wherein the method is applied to an electronic device, and the method comprises:
determining first location information of an intelligent driving device, second location information of a target key point, and a target floor on which the intelligent driving device is located;
obtaining third location information of the electronic device;
if it is determined that the electronic device is located on the target floor, recording a third track of the electronic device based on second information, wherein a start point of the third track is a location corresponding to the third location information, and the second information comprises posture information and direction information of the electronic device, and/or location fingerprint information; and
displaying a first display interface in response to a first operation of a user, wherein the first display interface comprises first prompt information, and the first prompt information indicates a direction from a current location of the electronic device to the intelligent driving device.

20. The method according to claim 19, wherein determining that the electronic device is located on the target floor comprises:
if a difference between obtained first data and second data of a barometer is less than a fifth threshold, determining that the electronic device is located on the target floor, wherein the first data is a value that is of the barometer and that is currently obtained by the electronic device, and the second data is a value that is of the barometer and that is obtained on the target floor and that is recorded by the electronic device; or
determining, based on obtained floor information, that the electronic device is located on the target floor.

21. The method according to claim 19 or 20, wherein before determining that the electronic device is located on the target floor, the method further comprises:
determining that a difference between the third location information and the second location information is less than or equal to a sixth threshold; or
determining that the third location information is location information obtained by the electronic device for the last time.

22. The method according to any one of claims 19 to 21, wherein the method further comprises:
displaying a second display interface in response to a second operation of the user, wherein the second display interface comprises the first location information, the second location information, indication information of a current location and a current direction of the electronic device, and/or the third track.

23. The method according to any one of claims 19 to 22, wherein recording the third track of the electronic device based on the second information comprises:
determining a location, a direction, and/or location fingerprint information at a current moment based on the second information and the third location information; and
recording the third track based on the location, the direction, and/or the location fingerprint information at the current moment.

24. The method according to any one of claims 19 to 23, wherein the first prompt information further comprises a distance from the current location to the intelligent driving device.

25. The method according to any one of claims 19 to 23, wherein determining the first location information of the intelligent driving device comprises:
obtaining first data information when a first preset condition is met, wherein the first data information comprises posture information and direction information of the electronic device, and/or location fingerprint information;
recording a first track of the electronic device based on the first data information, wherein a start point of the first track is a location point determined by the electronic device based on the first data information when the first preset condition is met;
determining an end point of the first track based on second data information when a second preset condition is met, wherein the first track of the electronic device is formed between the end point and the start point of the first track; and
determining the first location information of the intelligent driving device based on a direction of the first track or directions of some tracks in the first track and the second location information of the target key point.

26. An electronic device, comprising one or more processors and one or more memories, the one or more memories store one or more programs, and when the one or more programs are executed by the one or more processors, the indoor navigation method according to any one of claims 1 to 25 is performed.

27. A chip, wherein the chip comprises a processor and a communication interface, the communication interface is configured to: receive a signal, and transmit the signal to the processor, and the processor processes the signal, to enable the indoor navigation method according to any one of claims 1 to 25 to be performed.

28. A readable storage medium, wherein the readable storage medium stores instructions, and when the instructions are run on an electronic device, the indoor navigation method according to any one of claims 1 to 25 is performed.
